# EUROPEAN PATENT APPLICATION

(11) **EP 4 156 848 A1**
(43) Date of publication of application: **29.03.2023**
(21) Application number: 21828746.4
(22) Date of filing: 21.06.2021
(51) Int. Cl.: H04W 76/19

(54) **DEVICE CONNECTION METHOD AND RELATED DEVICE**

(30) Priority: 23.06.2020 CN 202010578997
(71) Applicant: Huawei Technologies Co., Ltd., Longgang District, Shenzhen, Guangdong 518129 (CN)
(72) Inventor: PAN, Changwu, Shenzhen, Guangdong 518129 (CN)
(74) Representative: Isarpatent
(86) International application number: PCT/CN2021/101165
(87) International publication number: WO 2021/259184

(57) **Abstract**

A device connection method and a network device are provided. The method specifically includes: A first wireless access device establishes, based on disconnection from a second wireless access device, a connection to the second wireless access device by using stored first configuration information. The first wireless access device receives a first notification message from a server through the connection established to the second wireless access device. The first wireless access device re-establishes a connection to the second wireless access device based on the first notification message by using second configuration information. The first wireless access device can receive the notification message from the server through the connection established to the second wireless access device by using the first configuration information. This ensures that the first wireless access device can restore the normal connection to the second wireless access device based on the notification message by using the second configuration information, which does not require manually restoring the connection, and therefore has low costs.

## Description

This application claims priority to Chinese Patent Application No. 202010578997.4, filed with the China National Intellectual Property Administration on June 23, 2020 and entitled "DEVICE CONNECTION METHOD AND RELATED DEVICE", which is incorporated herein by reference in its entirety.

### TECHNICAL FIELD

This application relates to the field of communications technologies, and in particular, to a device connection method and a related device.

### BACKGROUND

A mesh (mesh) network is a new WLAN type in a WLAN (Wireless Local Area Network, wireless local area network). Different from those in a conventional WLAN, access point (Access Point, AP) devices in the mesh network are connected to each other in a wireless manner, and multi-hop wireless routes may be established between the AP devices.

In the mesh network, an upstream root AP device is connected to a server in a wired manner, and a downstream AP device is connected to the root AP device in a wireless manner and then is indirectly connected to the server via the root AP device. A cloud management platform is deployed on the server to manage the AP devices in the mesh network in a unified manner.

Generally, a user can deliver, on the cloud management platform, configuration information to the AP devices in the mesh network to periodically change passwords of the AP devices or adjust channels between the AP devices. During delivery of the configuration information, if the root AP device first updates configuration information but another AP device does not receive the configuration information in time, the root AP device and the AP device are disconnected due to configuration inconsistency. As a result, the cloud management platform cannot deliver the configuration information to the AP device, and the AP device cannot restore the connection to the root AP device. Consequently, the AP device is out of management.

Currently, after the AP device is out of management, maintenance personnel are usually arranged to go to the site of the out-of-management device and log in to the out-of-management device through a serial port to modify configuration information of the out-of-management device, so as to ensure that the network connection to the out-of-management device is restored. When the AP devices are widely distributed, such manner of restoring the network connection to the out-of-management device usually requires high labor costs.

### SUMMARY

This application provides a device connection method and a related device. After a connection between a first wireless access device and a second wireless access device is disconnected, the first wireless access device may establish a connection to the second wireless access device by using pre-stored first configuration information, so that the first wireless access device can receive a notification message from a server through the connection established between the first wireless access device and the second wireless access device. This ensures that the first wireless access device can restore the normal connection to the second wireless access device based on the notification message by using second configuration information, which does not require manually restoring the connection, and therefore has low costs.

A first aspect of this application provides a device connection method, including: After a first wireless access device obtains that a connection between the first wireless access device and a second wireless access device is disconnected, the first wireless access device establishes, based on disconnection from the second wireless access device, a connection to the second wireless access device by using stored first configuration information. The first wireless access device receives a first notification message from a server through the connection established to the second wireless access device. The first wireless access device re-establishes the connection to the second wireless access device based on indication of the first notification message by using second configuration information.

The connection established by the first wireless access device to the second wireless access device by using the first configuration information may be a temporary connection, and the connection established by the first wireless access device to the second wireless access device by using the second configuration information may be a valid persistent connection. The first configuration information in the first wireless access device may be specifically mesh configuration information. The mesh configuration information may include one or more of a mesh-id, an initial key, an encryption manner, an authentication manner, and a minimum signal strength (link-rssi-threshold) supporting connection establishment.

In this solution, after the connection between the first wireless access device and the second wireless access device is disconnected, the first wireless access device restores the connection to the second wireless access device based on the stored first configuration information. This provides the first wireless access device with a channel for temporarily connecting to the server, so that the first wireless access device can receive the first notification message from the server, and re-establish the valid connection to the second wireless access device based on the first notification message by using the second configuration information, which does not require manually restoring the connection, and therefore has low costs.

Optionally, in a possible implementation, the first configuration information is preset in the first wireless access device, for example, is preset when the first wireless access device is delivered from a factory. Alternatively, the first configuration information is obtained by the first wireless access device from the server via the second wireless access device before the connection to the second wireless access device is disconnected, for example, when the first wireless access device still establishes the connection to the second wireless access device, the server may deliver the first configuration information to the first wireless access device via the second wireless access device. After receiving the first configuration information, the first wireless access device stores the first configuration information, so that after the connection to the second wireless access device is disconnected, the first wireless access device can restore the connection to the second access device by using the stored first configuration information, where the connection may be the temporary connection.

Optionally, in a possible implementation, that the first wireless access device re-establishes a connection to the second wireless access device based on the first notification message by using second configuration information may include: The first wireless access device re-establishes the connection to the second wireless access device by using the second configuration information in the first notification message, where the first notification message includes the second configuration information. For example, before the connection between the first wireless access device and the second wireless access device is disconnected, if the first wireless access device does not receive the second configuration information delivered by the server, the second configuration information delivered by the server may carry the second configuration information, so that the first wireless access device establishes the connection to the second wireless access device by using the second configuration information in the first notification message. Alternatively, the first wireless access device re-establishes, based on indication of the first notification message, the connection to the second wireless access device by using the received second configuration information, where the second configuration information is obtained by the first wireless access device from the server via the second wireless access device before the connection to the second wireless access device is disconnected. For example, the re-establishing the connection may be that the first wireless access device first disconnects the connection established to the second wireless access device by using the first configuration information, and then re-establishes the connection to the second wireless access device by using the second configuration information; or that the first wireless access device may initiate a request, authentication, or the like to the second wireless access device by using the second configuration information when establishing the connection to the second wireless access device by using the first configuration information, so that the first wireless access device can be adjusted, in a state such as a user-unaware state, to establish the connection to the second wireless access device by using the second configuration information.

Optionally, in a possible implementation, the method further includes: Before the first wireless access device receives the first notification message from the server, the first wireless access device sends a first message to the server through the connection established to the second wireless access device, where the first message is used to notify the server that the first wireless access device has received the second configuration information. In this case, that the first wireless access device re-establishes, based on indication of the first notification message, the connection to the second wireless access device by using the second configuration information includes: The first wireless access device receives the first notification message from the server, and the first wireless access device re-establishes, based on indication of the first notification message, the connection to the second wireless access device by using the received second configuration information.

Optionally, in a possible implementation, that a first wireless access device establishes, based on disconnection from a second wireless access device, a connection to the second wireless access device by using stored first configuration information includes: The first wireless access device establishes, based on preset duration in which the connection to the second wireless access device is disconnected, the connection to the second wireless access device by using the stored first configuration information. That is, after learning that the connection between the first wireless access device and the second wireless access device has been disconnected for the preset duration, the first wireless access device may establish the connection to the second wireless access device by using the stored first configuration information.

Optionally, in a possible implementation, that a first wireless access device establishes, based on disconnection from a second wireless access device, a connection to the second wireless access device by using stored first configuration information includes: The first wireless access device establishes, based on disconnection from a plurality of wireless access devices that include the second wireless access device, the connection to the second wireless access device by using the stored first configuration information. For example, when a network includes the plurality of wireless access devices directly connected to the server, the first wireless access device may attempt to establish connections to the plurality of wireless access devices. When the first wireless access device cannot establish the connections to the plurality of wireless access devices, the first wireless access device then attempts to establish the connection to the second wireless access device by using the stored first configuration information. This can improve stability and flexibility of running of a network system on one hand, and on the other hand avoid a connection failure caused when the first wireless access device directly attempts to establish the connection to the second wireless access device by using the stored first configuration information when the connection is disconnected due to a fault of the second wireless access device.

Optionally, in a possible implementation, before the first wireless access device receives a first notification message from a server through the connection established to the second wireless access device, the method further includes: The first wireless access device sends a second message to the server through the connection established to the second wireless access device, where the second message is used to notify the server that the first wireless access device establishes the connection to the second wireless access device by using the first configuration information. That is, after the first wireless access device establishes the connection to the second wireless access device by using the first configuration information, the first wireless access device may notify the server that the first wireless access device establishes the connection to the second wireless access device by using the first configuration information, so that the server delivers the first notification message to the first wireless access device.

A second aspect of this application provides a device connection method, including: A server determines that a first wireless access device establishes a connection to a second wireless access device by using first configuration information, where the first configuration information is used by the first wireless access device when the first wireless access device is disconnected from the second wireless access device. The server sends a first notification message to the first wireless access device through the connection between the first wireless access device and the second wireless access device, where the first notification message is used to indicate the first wireless access device to re-establish a connection to the second wireless access device by using second configuration information.

Optionally, in a possible implementation, the first configuration information is preset in the first wireless access device; or the first configuration information is sent by the server to the first wireless access device via the second wireless access device before the first wireless access device is disconnected from the second wireless access device.

Optionally, in a possible implementation, the first notification message includes the second configuration information, and the first notification message is used to indicate the first wireless access device to re-establish the connection to the second wireless access device by using the second configuration information in the first notification message; or before the connection between the first wireless access device and the second wireless access device is disconnected, the server sends the second configuration information to the first wireless access device via the second wireless access device; and the first notification message is used to indicate the first wireless access device to re-establish the connection to the second wireless access device by using the received second configuration information.

Optionally, in a possible implementation, the method further includes: Before the server sends the first notification message to the first wireless access device, the server receives a first message that is sent by the first wireless access device through the connection established to the second wireless access device, where the first message is used to notify the server that the first wireless access device has received the second configuration information; and the server sends the first notification message to the first wireless access device, where the first notification message is used to indicate the first wireless access device to re-establish the connection to the second wireless access device by using the received second configuration information.

Optionally, in a possible implementation, the method further includes: Before the server sends the first notification message to the first wireless access device, the server receives a second message, where the second message is used to notify the server that the first wireless access device establishes the connection to the second wireless access device by using the first configuration information. The second message may be sent by the first wireless access device to the server, or the second message may be sent by the second wireless access device to the server. This is not specifically limited herein.

Optionally, in a possible implementation, the method further includes: The server determines that a third wireless access device establishes a connection to the second wireless access device by using third configuration information, where the third configuration information is used by the third wireless access device when the third wireless access device is disconnected from the second wireless access device. The server determines, based on locations of the first wireless access device and the third wireless access device in a network topology, to send the first notification message to the first wireless access device. The third wireless access device may be connected to the second wireless access device via the first wireless access device. The third wireless access device can establish the connection to the second wireless access device only when the first wireless access device establishes the connection to the second wireless access device. Therefore, the server can determine, based on the network topology, to first send the first notification message to the first wireless access device, to ensure that the first wireless access device first re-establishes the connection to the second wireless device by using the second configuration information, and then sends, to the third wireless access device, the notification message used to re-establish the connection to the second wireless access device. This avoids a case in which the third wireless access device is offline because the first wireless access device and the second wireless access device cannot be normally connected, and repeatedly attempts the temporary connection by using the third configuration information due to the offline.

Optionally, in a possible implementation, the third wireless access device is connected to the second wireless access device via the first wireless access device. After the server sends a first notification message to the first wireless access device through the connection, the method further includes: The server re-establishes a connection to the second wireless access device via the first wireless access device, or the server sends a second notification message to the third wireless access device after sending the first notification message for preset duration, where the second notification message is used to indicate the third wireless access device to re-establish the connection to the second wireless access device by using fourth configuration information. That is, the server may deliver the second notification message to the third wireless access device after determining that the first wireless access device successfully establishes the connection to the second wireless access device; or the server may deliver the second notification message to the third wireless access device after delivering the first notification message to the first wireless access device for preset duration, that is, deliver the second notification message after waiting for a period of time, so that the first wireless access device re-establishes the connection to the second wireless access device based on the first notification message.

Optionally, in a possible implementation, the method further includes: The server determines, based on a received third message, that a third wireless access device establishes a connection to the second wireless access device by using third configuration information, where the third configuration information is used by the third wireless access device when the third wireless access device is disconnected from the second wireless access device. The server determines that the third wireless access device cannot re-establish the connection to the second wireless access device by using fourth configuration information, and the server generates alarm information.

Optionally, in a possible implementation, that the server determines that the third wireless access device cannot re-establish the connection to the second wireless access device by using fourth configuration information includes: The server determines signal strength between the third wireless access device and the second wireless access device based on the third configuration information and a distance between the third wireless access device and the second wireless access device. The server determines, based on that the signal strength is less than a first threshold, that the third wireless access device cannot re-establish the connection to the second wireless access device by using the fourth configuration information. For example, in a network planning process, the server may obtain location information of each of the third access device and the second wireless access device, and may calculate the distance between the third access device and the second wireless access device based on the location information of each of the third access device and the second wireless access device. Then, the server calculates, based on parameters such as an antenna gain, a frequency bandwidth, and a transmit power in the second configuration information and the distance, the signal strength between the third wireless access device and the second wireless access device after the connection is established by using the second configuration information. If the signal strength obtained through calculation is less than the preset first threshold, it may be considered that the second wireless access device cannot establish the stable and effective connection to the third wireless access device, that is, the server may determine that the third wireless access device cannot re-establish the connection to the second wireless access device by using the second configuration information.

Optionally, in a possible implementation, that the server determines that the third wireless access device cannot re-establish the connection to the second wireless access device by using fourth configuration information includes: The server determines a quantity of times that the third wireless access device establishes the connection to the second wireless access device by using the third configuration information. The server determines, based on that the quantity of times is greater than a second threshold, that the third wireless access device cannot re-establish the connection to the second wireless access device by using the fourth configuration information.

A third aspect of this application provides a device connection method, including: A second wireless access device determines, based on stored information, to allow a first wireless access device to establish a connection by using first configuration information, where the first configuration information is used by the first wireless access device when the first wireless access device is disconnected from the second wireless access device. The second wireless access device forwards, to the first wireless access device through the connection, a first notification message sent by a server. The second wireless access device receives second configuration information from the first wireless access device, and allows, based on the second configuration information, the first wireless access device to re-establish a connection.

Optionally, in a possible implementation, the stored information includes a first key, the first configuration information includes a second key, and a second wireless access device determines, based on stored information, to allow a first wireless access device to establish a connection by using first configuration information includes: The second wireless access device determines, based on matching between the first key and the second key, to allow the first wireless access device to establish the connection by using the first configuration information.

Optionally, in a possible implementation, before the second wireless access device forwards, to the first wireless access device through the connection, a first notification message sent by a server, the method further includes: The second wireless access device sends a second message to the server through the connection, where the second message is used to notify the server that the first wireless access device establishes the connection to the second wireless access device by using the first configuration information.

Optionally, in a possible implementation, the first configuration information is preset in the first wireless access device, for example, is preset when the first wireless access device is delivered from a factory. Alternatively, the first configuration information is obtained by the first wireless access device from the server via the second wireless access device before the connection to the second wireless access device is disconnected.

A fourth aspect of this application provides a network device, including: a transceiver unit and a processing unit. The processing unit is configured to: establish, by using a first wireless access device, based on disconnection from a second wireless access device, a connection to the second wireless access device by using stored first configuration information. The transceiver unit is configured to receive a first notification message from a server through the connection established between the first wireless access device and the second wireless access device. The processing unit is configured to re-establish, by using the first wireless access device, a connection to the second wireless access device based on the first notification message by using second configuration information.

Optionally, in a possible implementation, the first configuration information is preset in the first wireless access device; or the first configuration information is obtained by the first wireless access device from the server via the second wireless access device before the connection to the second wireless access device is disconnected.

Optionally, in a possible implementation, the first notification message includes the second configuration information, and the processing unit is configured to: re-establish the connection to the second wireless access device by using the second configuration information in the first notification message; or the second configuration information is obtained by the first wireless access device from the server via the second wireless access device before the connection to the second wireless access device is disconnected, and the processing unit is configured to: re-establish, based on indication of the first notification message, the connection to the second wireless access device by using the second configuration information

Optionally, in a possible implementation, before the first wireless access device receives the first notification message from the server, the transceiver unit is configured to send a first message to the server through the connection established to the second wireless access device, where the first message is used to notify the server that the first wireless access device has received the second configuration information; and receive the first notification message from the server. The processing unit is configured to re-establish, based on indication of the first notification message, the connection to the second wireless access device by using the received second configuration information.

Optionally, in a possible implementation, the processing unit is configured to establish, based on preset duration in which the connection to the second wireless access device is disconnected, the connection to the second wireless access device by using the stored first configuration information.

Optionally, in a possible implementation, the processing unit is configured to establish, based on disconnection from a plurality of wireless access devices that include the second wireless access device, the connection to the second wireless access device by using the stored first configuration information.

Optionally, in a possible implementation, the transceiver unit is configured to send a second message to the server through the connection established to the second wireless access device, where the second message is used to notify the server that the first wireless access device establishes the connection to the second wireless access device by using the first configuration information.

A fifth aspect of this application provides a server, including a transceiver unit and a processing unit. The processing unit is configured to determine that a first wireless access device establishes a connection to a second wireless access device by using first configuration information, where the first configuration information is used by the first wireless access device when the first wireless access device is disconnected from the second wireless access device. The transceiver unit is configured to send a first notification message to the first wireless access device through the connection, where the first notification message is used to indicate the first wireless access device to re-establish a connection to the second wireless access device by using second configuration information.

Optionally, in a possible implementation, the first configuration information is preset in the first wireless access device; or the first configuration information is sent by the server to the first wireless access device via the second wireless access device before the first wireless access device is disconnected from the second wireless access device.

Optionally, in a possible implementation, the first notification message includes the second configuration information, and the first notification message is used to indicate the first wireless access device to re-establish the connection to the second wireless access device by using the second configuration information in the first notification message; or before the connection between the first wireless access device and the second wireless access device is disconnected, the transceiver unit is configured to send the second configuration information to the first wireless access device via the second wireless access device; and the first notification message is used to indicate the first wireless access device to re-establish the connection to the second wireless access device by using the received second configuration information.

Optionally, in a possible implementation, before the transceiver unit sends the first notification message to the first wireless access device, the transceiver unit is configured to: receive a first message that is sent by the first wireless access device through the connection established to the second wireless access device, where the first message is used to notify the server that the first wireless access device has received the second configuration information; and send the first notification message to the first wireless access device, where the first notification message is used to indicate the first wireless access device to re-establish the connection to the second wireless access device by using the received second configuration information.

Optionally, in a possible implementation, the transceiver unit is configured to receive, before sending the first notification message to the first wireless access device, a second message from the server, where the second message is used to notify the server that the first wireless access device establishes the connection to the second wireless access device by using the first configuration information.

Optionally, in a possible implementation, the processing unit is configured to: determine that a third wireless access device establishes a connection to the second wireless access device by using third configuration information, where the third configuration information is used by the third wireless access device when the third wireless access device is disconnected from the second wireless access device; and determine, based on locations of the first wireless access device and the third wireless access device in a network topology, to send the first notification message to the first wireless access device.

Optionally, in a possible implementation, the third wireless access device is connected to the second wireless access device via the first wireless access device. After the transceiver unit sends a first notification message to the first wireless access device through the connection, the transceiver unit is further configured to re-establish a connection to the second wireless access device via the first wireless access device, or send a second notification message to the third wireless access device after sending the first notification message for preset duration, where the second notification message is used to indicate the third wireless access device to re-establish the connection to the second wireless access device by using fourth configuration information.

Optionally, in a possible implementation, the processing unit is configured to: determine, based on a received third message, that a third wireless access device establishes a connection to the second wireless access device by using third configuration information, where the third configuration information is used by the third wireless access device when the third wireless access device is disconnected from the second wireless access device; and determine that the third wireless access device cannot re-establish the connection to the second wireless access device by using fourth configuration information. The server generates alarm information.

Optionally, in a possible implementation, the processing unit is configured to: determine signal strength between the third wireless access device and the second wireless access device based on the third configuration information and a distance between the third wireless access device and the second wireless access device; and determine, based on that the signal strength is less than a first threshold, that the third wireless access device cannot re-establish the connection to the second wireless access device by using the fourth configuration information.

Optionally, in a possible implementation, the processing unit determines a quantity of times that the third wireless access device establishes the connection to the second wireless access device by using the third configuration information. The processing unit determines, based on that the quantity of times is greater than a second threshold, that the third wireless access device cannot re-establish the connection to the second wireless access device by using the fourth configuration information.

A sixth aspect of this application provides a network device, including a transceiver unit and a processing unit. The processing unit is configured to determine, based on stored information, to allow a first wireless access device to establish a connection by using first configuration information, where the first configuration information is used by the first wireless access device when the first wireless access device is disconnected from a second wireless access device. The transceiver unit is configured to forward, to the first wireless access device through the connection, first notification message sent by a server. The transceiver unit is configured to: receive second configuration information from the first wireless access device, and allow, based on the second configuration information, the first wireless access device to re-establish a connection.

Optionally, in a possible implementation, the stored information includes a first key, the first configuration information includes a second key, and the processing unit is configured to determine, based on matching between the first key and the second key, to allow the first wireless access device to establish the connection by using the first configuration information.

Optionally, in a possible implementation, before the transceiver unit forwards, to the first wireless access device through the connection, a first notification message sent by a server, the transceiver unit is further configured to send a second message to the server through the connection, where the second message is used to notify the server that the first wireless access device establishes the connection to the second wireless access device by using the first configuration information.

A seventh aspect of this application provides a network device. The network device includes a processor and a memory. The memory is configured to store instructions. The processor is configured to execute the instructions in the memory, so that the network device performs the method according to any one of the first aspect or the third aspect.

An eighth aspect of this application provides a network device. The network device includes a processor. The processor is coupled to a memory, and the processor is configured to execute instructions in the memory, so that the network device performs the method according to any one of the first aspect or the third aspect.

A ninth aspect of this application provides a server. The server includes a processor and a memory. The memory is configured to store instructions. The processor is configured to execute the instructions in the memory, so that the server performs the method according to any one of the second aspect.

A tenth aspect of this application provides a server. The server includes a processor. The processor is coupled to a memory, and the processor is configured to execute instructions in the memory, so that the server performs the method according to any one of the second aspect.

An eleventh aspect of this application provides a computer storage medium. The computer storage medium may be non-volatile. The computer storage medium stores computer-readable instructions, and when the computer-readable instructions are executed by a processor, the method in any design in the first aspect to the third aspect is implemented.

A twelfth aspect of this application provides a computer program product including instructions. When the computer program product runs on a computer, the computer is enabled to perform the method according to any design in the first aspect to the third aspect.

A thirteenth aspect of this application provides a chip system. The chip system includes a processor, configured to support a network device in implementing functions in the foregoing aspects, for example, sending or processing data and/or information in the foregoing methods. In a possible design, the chip system further includes a memory, where the memory is configured to store program instructions and data for the network device. The chip system may include a chip, or may include a chip and another discrete component.

According to the foregoing technical solutions, it can be learned that embodiments of this application have the following advantages:

This application provides the device connection method and the related device. After the connection between the first wireless access device and the second wireless access device is disconnected, the first wireless access device may establish the connection to the second wireless access device by using the pre-stored first configuration information, so that the first wireless access device can receive the notification message from the server through the connection established between the first wireless access device and the second wireless access device. This ensures that the first wireless access device can restore the normal connection to the second wireless access device based on the notification message by using the second configuration information, which does not require manually restoring the connection, and therefore has low costs and improves overall operation efficiency and flexibility of a wireless network system.

### BRIEF DESCRIPTION OF DRAWINGS

FIG. 1 is a schematic diagram of a mesh network according to an embodiment of this application;
FIG. 2 is a schematic flowchart of a device connection method 200 according to an embodiment of this application;
FIG. 3 is a schematic interaction diagram of restoring a connection between devices according to an embodiment of this application;
FIG. 4 is a schematic interaction diagram of restoring a connection between devices according to an embodiment of this application;
FIG. 5 is a schematic interaction diagram of restoring a connection between devices according to an embodiment of this application;
FIG. 6 is a schematic diagram of a mesh network with multi-level connections according to an embodiment of this application;
FIG. 7A and FIG. 7B are a schematic flowchart of restoring a connection by a wireless access device according to an embodiment of this application; and
FIG. 8 is a schematic diagram of a structure of a network device/server 800 according to an embodiment of this application.

### DESCRIPTION OF EMBODIMENTS

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in appropriate circumstances, so that embodiments described herein can be implemented in other orders than the order illustrated or described herein. Moreover, the terms "include", "have" and any other variants mean to cover the non-exclusive inclusion, for example, a process, method, system, product, or device that includes a series of steps or modules is not necessarily limited to those steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into units in this application is logical division and may be other division in an actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

A mesh network, namely, a "meshnet", is a multi-hop (multi-hop) network and is one of the key technologies to resolve the "last-mile" problem. In a process of evolution to a next generation network, wireless is an indispensable technology. The mesh network may communicate with another network, and is a network architecture that can be expanded continuously. Any two devices can be interconnected in a wireless manner. With multi-hop interconnection and mesh topology features, the mesh network has evolved into an effective solution for various wireless access networks, such as a broadband home network, a community network, an enterprise network, and a metropolitan area network.

In the mesh network, an upstream root AP device is connected to a server in wired manner, and a downstream AP device is connected to the root AP device in a wireless manner and then is indirectly connected to the server via the root AP device. A cloud management platform is deployed on the server to manage the AP devices in the mesh network in a unified manner. Generally, because the upstream root AP device may be connected to the server in a wired manner, or may be connected to the downstream AP device in a wireless manner, the root AP device may be considered as an AP device connected to a mesh network and a non-mesh network, and the root AP device may also be referred to as a mesh portal point (mesh portal point, MPP). The downstream AP devices may be uniformly referred to as mesh points (mesh points, MP).

To ensure security of the mesh network, a user can usually deliver, on the cloud management platform on the server, configuration information to the MPP and the MP in the mesh network to periodically change passwords of the MPP and the MP or adjust channels between the MPP and the MP. During delivery of the configuration information, if the MPP first updates configuration information but the MP does not receive the configuration information in time, the MPP and MP are disconnected due to configuration inconsistency. For example, after the MPP receives a new key or channel configuration information, the MPP updates to a new key or channel, but the MP continues to use an old key or channel because the MP does not receive the new configuration information. The MP cannot establish a connection with the MPP. As a result, the cloud management platform cannot deliver the configuration information to the MP because the MPP is disconnected from the MP, and the MP cannot restore a connection with the MPP, and the MPP is out of management.

Currently, after the MP is out of management, maintenance personnel are usually arranged to go to the site of the out-of-management device and log in to the out-of-management device through a serial port to modify configuration information of the out-of-management device, so as to ensure that the network connection to the out-of-management device is restored. When the AP devices are widely distributed, such manner of restoring the network connection to the out-of-management device usually requires high labor costs and is not conducive to maintaining stable running of a wireless network system.

In view of this, embodiments of this application provide a device connection method and a network device. After a connection between an MP and an MPP is disconnected, the MP may establish a connection to the MPP by using pre-stored first configuration information, so that the MP can receive a notification message from a server through the connection established between the MP and the MPP. This ensures that the MP can restore the normal connection to the MPP by using second configuration information based on the notification message, which does not require manually restoring the connection, and therefore has low costs and has a high connection restoration speed.

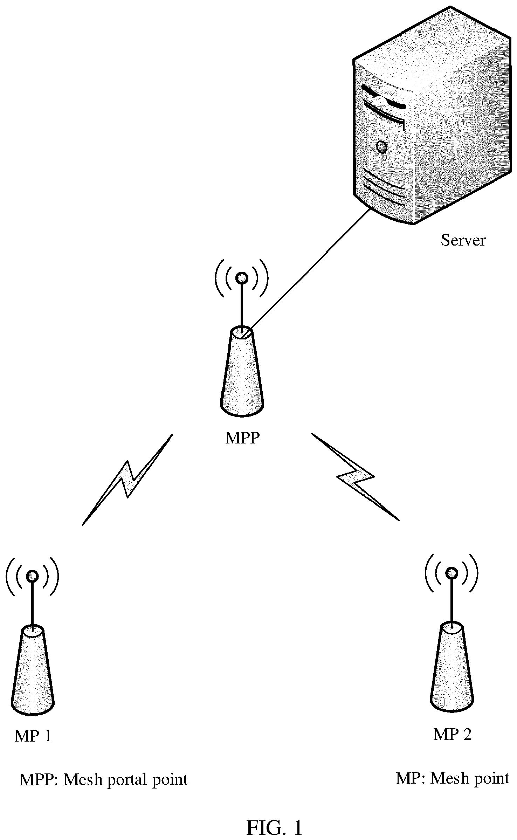

FIG. 1 is a schematic diagram of a mesh network according to an embodiment of this application. As shown in FIG. 1, the mesh network includes an MPP, an MP 1, and an MP 2. The MPP is connected to a server in a wired manner, and the MP 1 and the MP 2 are connected to the MPP in a wireless manner and are indirectly connected to the server. A cloud management platform is deployed on the server, and the cloud management platform may deliver new configuration information to the MPP, the MP 1, and the MP 2. The cloud management platform delivers the new configuration information to the MPP, the MP 1, and the MP 2. When only the MPP and the MP 2 successfully receive the configuration information, a connection between the MPP and the MP 1 is disconnected because configuration information in the MPP and the MP 1 is inconsistent. After the connection to the MPP is disconnected, the MP 1 may establish a connection to the MPP by using stored first configuration information. In one case, a wireless network system allows the MP 1 to directly establish a persistent connection to the MPP by using the first configuration information. In another case, the first configuration information is used to establish a temporary connection between the MP 1 and the MPP, so that the MP 1 can receive a notification message from the server through the connection. The MP 1 re-establishes the connection to the MPP by using second configuration information based on indication of the notification message, where the second configuration information is the latest configuration information. The MP 1 may restore the normal connection to the MPP by using the second configuration information. For example, the MP 1 restores the connection with high-security and high-reliability to the MPP by using a key in the second configuration information.

An application scenario of the device connection method provided in embodiments of this application is described above by using the mesh network as an example. It may be understood that the device connection method provided in embodiments of this application may be applied to another application scenario, for example, a scenario in which the foregoing problems may exist, such as a wireless distributed system (Wireless Distribution System, WDS). The scenario to which embodiments of this application are applied is not uniquely limited herein.

For ease of understanding, a device connection method provided in embodiments of this application is described in detail below by using an example in which the mesh network is a scenario to which embodiments of this application are applied. In the mesh network, a first wireless access device described below may be the MP in the mesh network, and a second wireless access device may be the MPP in the mesh network. Certainly, when the device connection method provided in embodiments of this application is applied to another network system, the first wireless access device and the second wireless access device may alternatively be corresponding devices in the network system. The first wireless access device and the second wireless access device are not specifically limited in embodiments of this application.

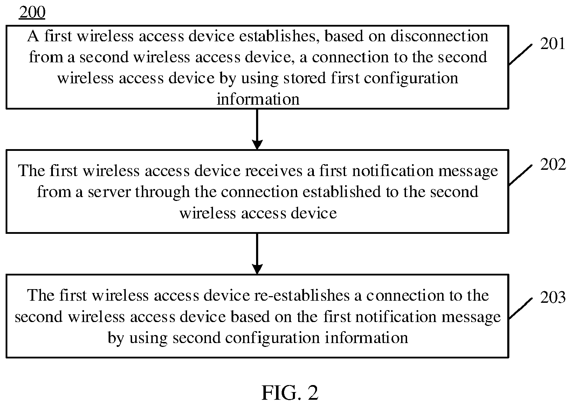

FIG. 2 is a schematic flowchart of a device connection method 200 according to an embodiment of this application. The method 200 is executed by a first wireless access device. As shown in FIG. 2, the device connection method 200 provided in this embodiment of this application includes the following steps.

201: The first wireless access device establishes, based on disconnection from a second wireless access device, a connection to the second wireless access device by using stored first configuration information.

In this embodiment, after obtaining that the connection between the first wireless access device and the second wireless access device is disconnected, the first wireless access device may establish the connection to the second wireless access device by using the stored first configuration information. Optionally, after learning that the connection between the first wireless access device and the second wireless access device is disconnected, the first wireless access device may establish the connection to the second wireless access device by using the first configuration information; or after learning that the connection between the first wireless access device and the second wireless access device has been disconnected for preset duration, the first wireless access device attempts to establish the connection to the second wireless access device by using the first configuration information.

In a possible embodiment, the first wireless access device may specifically establish, based on disconnection from a plurality of wireless access devices that include the second wireless access device, the connection to the second wireless access device by using the stored first configuration information. For example, when a network includes a plurality of wireless access devices directly connected to a server, the first wireless access device may attempt to establish connections to the plurality of wireless access devices. When the first wireless access device cannot establish the connections to the plurality of wireless access devices, that is, when the first wireless access device is disconnected from the plurality of wireless access devices that include the second wireless access device, the first wireless access device may attempt to establish the connection to the second wireless access device by using the stored first configuration information. This can improve stability and flexibility of running of a network system on one hand, and on the other hand avoid a connection failure caused when the first wireless access device directly attempts to establish the connection to the second wireless access device by using the stored first configuration information when the connection is disconnected due to a fault of the second wireless access device.

For example, when a mesh network includes a plurality of MPPs connected to a server in a wired manner, after an MP is disconnected from one of the MPPs, the MP attempts to establish a connection with another MPP by using original configuration information. When the MP cannot establish connections to all other MPPs, the MP establishes a connection to the one of the MPPs by using the first configuration information.

The first wireless access device may obtain, in a plurality of manners, information about disconnection between the first wireless access device and the second wireless access device.

In a possible implementation, the first wireless access device may detect a connection between the first wireless access device and the second wireless access device in real time or periodically, so that the first wireless access device detects that the connection between the first wireless access device and the second wireless access device is disconnected after the connection between the first wireless access device and the second wireless access device is disconnected. For example, when the connection between the first wireless access device and the second wireless access device has a heartbeat, the first wireless access device may determine, by detecting whether the heartbeat times out, whether the connection between the first wireless access device and the second wireless access device is disconnected. For example, when the second wireless access device sends a heartbeat packet to the first wireless access device once at a specific time interval (for example, 10 seconds), if the first wireless access device still does not receive a heartbeat packet after a time interval since a last heartbeat packet is received exceeds the time interval, the first wireless access device may consider that the connection between the first wireless access device and the second wireless access device is disconnected.

In another possible implementation, the first wireless access device may learn, by obtaining information sent by another device, that the connection between the first wireless access device and the second wireless access device is disconnected. For example, in a mesh network, a device configured to monitor a connection status between wireless access devices may be disposed. After the device learns, through monitoring, that the connection between the first wireless access device and the second wireless access device is disconnected, the device may send a notification message to the first wireless access device, so as to notify the first wireless access device that the connection between the first wireless access device and the second wireless access device is disconnected.

It may be understood that the first configuration information may be preset in the first wireless access device, for example, the first configuration information is preset in the first wireless access device when the first wireless access device is delivered from a factory. Alternatively, the first configuration information may be obtained by the first wireless access device from the server via the second wireless access device before the connection between the first wireless access device and the second wireless access device is disconnected, for example, when the first wireless access device still establishes the connection to the second wireless access device, the server may deliver the first configuration information to the first wireless access device via the second wireless access device. After receiving the first configuration information, the first wireless access device stores the first configuration information, so that after the connection to the second wireless access device is disconnected, the first wireless access device can restore the connection to the second access device by using the stored first configuration information. It may be understood that, when the first wireless access device is pre-configured with the first configuration information, the first wireless access device may also receive new configuration information delivered by the server to replace the pre-configured first configuration information.

In a possible implementation, the first wireless access device may further perform the following operations in the method 200.

202: The first wireless access device receives a first notification message from the server through the connection established to the second wireless access device.

After the first wireless access device establishes the connection to the second wireless access device by using the first configuration information, the server may learn that the first wireless access device establishes the connection to the second wireless access device by using the first configuration information. Based on this, the server may deliver the first notification message to the first wireless access device via the second wireless access device, where the first notification message is used to notify the first wireless access device to establish the connection to the second wireless access device by using second configuration information.

The server may learn, in a plurality of manners, that the first wireless access device establishes the connection to the second wireless access device by using the first configuration information.

In a possible manner, after the first wireless access device successfully establishes the connection to the second wireless access device by using the first configuration information, the first wireless access device may send a second message to the server via the second wireless access device, where the second message is used to indicate that the first wireless access device establishes the connection to the second wireless access device by using the first configuration information. That is, the server may learn, based on the second message actively reported by the first wireless access device, that the first wireless access device successfully establishes the connection to the second wireless access device by using the first configuration information.

In another possible manner, after the first wireless access device successfully establishes the connection to the second wireless access device by using the first configuration information, the second wireless access device may actively report, to the server, information that the second wireless access device establishes the connection to the first wireless access device, and notifies the server that the first wireless access device establishes the connection to the second wireless access device by using the first configuration information. In this way, the server can also learn, based on the information reported by the second wireless access device, that the first wireless access device successfully establishes the connection to the second wireless access device by using the first configuration information.

203: The first wireless access device re-establishes a connection to the second wireless access device based on the first notification message by using the second configuration information.

After receiving the first notification message, the first wireless access device re-establishes the connection to the second wireless access device based on indication of the first notification message by using the second configuration information. For example, the re-establishing the connection may be that the first wireless access device first disconnects the connection established to the second wireless access device by using the first configuration information, and then re-establishes the connection to the second wireless access device by using the second configuration information; or that the first wireless access device may initiate a request, authentication, or the like to the second wireless access device by using the second configuration information when establishing the connection to the second wireless access device by using the first configuration information, so that the first wireless access device can be adjusted, in a state such as a user-unaware state, to establish the connection to the second wireless access device by using the second configuration information.

The second configuration information may be carried in the first notification message, and the first wireless access device re-establishes the connection to the second wireless access device by using the second configuration information in the first notification message. Alternatively, the second configuration information may be obtained by the first wireless access device from the server via the second wireless access device before the connection between the first wireless access device and the second wireless access device is disconnected.

In a possible case, before the connection between the first wireless access device and the second wireless access device is disconnected, the server separately delivers the second configuration information to the first wireless access device and the second wireless access device. However, the first wireless access device and the second wireless access device do not successfully establish the connection by using the second configuration information. As a result, the second wireless access device is disconnected from the second wireless access device.

In this case, a reason why the connection between the first wireless access device and the second wireless access device is disconnected is that the first wireless access device does not receive the latest configuration information (namely, the second configuration information). The first wireless access device cannot establish, by using the original configuration information, the connection to the second wireless access device that uses the second configuration information. Therefore, the server can include the second configuration information in the first notification message sent to the first wireless access device, so that the first wireless access device can re-establish the connection to the second wireless access device by using the second configuration information in the first notification message.

In another possible case, before the connection between the first wireless access device and the second wireless access device is disconnected, the server separately delivers the second configuration information to the first wireless access device and the second wireless access device; and the server successfully delivers the second configuration information to the first wireless access device, but the server fails to deliver the second configuration information to the second wireless access device.

In the foregoing case, a reason why the connection between the first wireless access device and the second wireless access device is disconnected is that the second wireless access device does not receive the second configuration information. The first wireless access device cannot establish, by using the second configuration information, the connection to the second wireless access device that uses the original configuration information. Because the first wireless access device has actually received the second configuration information, the server may send the first notification message to the first wireless access device after successfully re-delivering the second configuration information to the second wireless access device in, for example, a wired manner, where the first notification message does not carry the second configuration information, and only is used to indicate the first wireless access device to re-establish the connection to the second wireless access device by using the second configuration information.

It may be understood that, to ensure that the server can determine whether the first wireless access device and the second wireless access device successfully receive the newly delivered second configuration information, the first wireless access device and the second wireless access device may notify, after successfully receiving the newly delivered second configuration information, the server that the first wireless access device and the second wireless access device successfully receive the second configuration information. That is, the server may determine, based on a case in which a message, that the second configuration information is successfully received, fed back by the second wireless access device is received, but a message, that the second configuration information is successfully received, fed back by the first wireless access device cannot be obtained, that the second wireless access device receives the second configuration information and the first wireless access device does not receive the second configuration information. Therefore, the server may include the second configuration information in the first notification message sent to the first wireless access device.

Similarly, the server may determine, based on a case in which a message, that the second configuration information is successfully received, fed back by the first wireless access device is received, but a message, that the second configuration information is successfully received, fed back by the second wireless access device cannot be obtained, that the first wireless access device receives the second configuration information and the second wireless access device does not receive the second configuration information. In this case, the first notification message sent by the server to the first wireless access device does not need to carry the second configuration information.

It should be noted that, in the content described above, there may be a plurality of reasons why the server delivers the second configuration information to the first wireless access device and the second wireless access device, but the connection between the first wireless access device and the second wireless access device fails.

For example, in a possible case, time for which the server delivers the second configuration information to the first wireless access device and the second wireless access device is inconsistent. As a result, time for which the first wireless access device and the second wireless access device receive the second configuration information is inconsistent and time for which the second configuration information takes effect is inconsistent. For example, the server first delivers the second configuration information to the first wireless access device, and delivers the second configuration information to the second wireless access device after a period of time (for example, after heartbeat timeout duration between the first wireless access device and the second wireless access device is exceeded); or although the server sends the second configuration information in time, the information does not arrive at the second wireless access device within heartbeat time due to a network problem. As a result, after the first wireless access device receives the second configuration information and the second configuration information takes effect, because the second wireless access device still does not receive the second configuration information or the second configuration information still does not take effect on the second wireless access device, the first wireless access device that uses the second configuration information cannot establish the connection to the second wireless access device that still uses the original configuration information, that is, the connection between the first wireless access device and the second wireless access device is disconnected. For another example, the server first delivers the second configuration information to the second wireless access device, and still does not deliver the second configuration information to the first wireless access device before the second configuration information on the second wireless access device takes effect. As a result, the first wireless access device cannot establish the connection to the second wireless access device either because the first wireless access device does not receive the second configuration information.

In another possible case, when the first wireless access device or the second wireless access device is in a device running special period, the server may also fail to deliver the second configuration information to the first wireless access device or the second access device. For example, the first wireless access device and the second wireless access device each usually have a function of periodically backing up data. If the server delivers the second configuration information to the first wireless access device when the first wireless access device is in a data backup period, because the first wireless access device is relatively busy, the server may fail to deliver the second configuration information to the first wireless access device.

In still another possible case, if network packet loss occurs when the server delivers the second configuration information to the first wireless access device or the second wireless access device, the server may also fail to deliver the second configuration information. For example, in a process in which the server delivers the second configuration information to the first wireless access device, a packet carrying the second configuration information is lost, and the first wireless access device cannot correctly identify the packet carrying the second configuration information. As a result, the second configuration information is not successfully delivered to the first wireless access device, that is, the server fails to deliver the second configuration information to the first wireless access device.

In addition, when the second configuration information delivered by the server conflicts with another configuration of the first wireless access device or the second wireless access device, the second configuration information may not take effect on the first wireless access device or the second wireless access device.

In addition to the foregoing reasons, the first wireless access device and the second wireless access device may also fail to establish the connection although the server delivers the second configuration information due to another reason.

In this embodiment, after the connection between the first wireless access device and the second wireless access device is disconnected, the first wireless access device may establish the connection to the second wireless access device by using the pre-stored first configuration information, where the connection is temporary, so that the first wireless access device can receive the notification message from the server through the connection established between the first wireless access device and the second wireless access device. This ensures that the first wireless access device can restore the normal connection to the second wireless access device based on the notification message by using the second configuration information, which does not require manually restoring the connection, and therefore has low costs.

The foregoing describes in detail a process in which the first wireless access device restores the connection to the second wireless access device. For ease of understanding, the following describes in detail a process in which the first wireless access device establishes the connection to the second wireless access device by using the first configuration information.

Specifically, the first wireless access device stores the first configuration information, and the second wireless access device stores information that can be used to determine whether to allow establishment of the connection to the first wireless access device that uses the first configuration information. For example, the first configuration information in the first wireless access device may be specifically mesh configuration information. The mesh configuration information may include one or more of a mesh-id, an initial key, an encryption manner, an authentication manner, and a minimum signal strength (link-rssi-threshold) supporting connection establishment. The mesh-id is an ID of a mesh network, and is used by the first wireless access device and the second wireless access device to discover each other and establish a connection. The initial key may be specifically a pairwise master key (pairwise master key, PMK), and the PMK may be used to generate a final key for encrypting a data packet. The encryption manner is a manner of performing encryption when the first wireless access device sends a data packet. The authentication manner is a manner of performing authentication when the first wireless access device receives a data packet sent by another wireless access device.

For the second wireless access device, the information stored in the second wireless access device may include the foregoing mesh configuration information and radio frequency configuration information. The mesh configuration information stored in the second wireless access device is the same as the mesh configuration information stored in the first wireless access device, and the radio frequency configuration information stored in the second wireless access device may specifically include one or more of a channel, a frequency bandwidth, and transmission power.

In the process in which the first wireless access device establishes the connection to the second wireless access device, the first wireless access device may scan surrounding signal information to obtain the radio frequency configuration information of the second wireless access device, that is, obtain the channel, the frequency bandwidth, and the transmission power of the second wireless access device. Then, the first wireless access device negotiates with the second wireless access device based on the stored mesh configuration information. When the mesh configuration information in the first wireless access device is the same as the mesh configuration information in the second wireless access device, the first wireless access device successfully negotiates with the second wireless access device, and the second wireless access device determines to allow establishment of the connection to the first wireless access device that uses the first configuration information. In this case, the first wireless access device successfully establishes the connection to the second wireless access device by using the first configuration information.

For example, the information stored in the second wireless access device includes a first key, and the first configuration information stored in the first wireless access device includes a second key. In the process in which the first wireless access device attempts to establish the connection to the second wireless access device by using the first configuration information, the first wireless access device sends the second key to the second wireless access device. The second wireless access device determines, based on matching between the first key and the second key, to allow the first wireless access device to establish the connection by using the first configuration information.

It should be noted that, to ensure communication security, the connection established by the first wireless access device to the second wireless access device by using the first configuration information may be the temporary connection, and the temporary connection established by the first wireless access device to the second wireless access device is used by the first wireless access device to obtain the first notification message from the server, so that the first wireless access device can establish the connection to the second wireless access device by using the second configuration information. That is, for the first wireless access device and the second wireless access device, the connection established by using the second configuration information newly delivered by the server is a secure persistent connection, and the connection established by using the first configuration information is the temporary connection. The connection is established by using the first configuration information to provide a temporary channel for communication connection between the first wireless access device and the server, so that the first wireless access device can receive the first notification message from the server and restore, based on the first notification message, the normal persistent connection to the second wireless access device.

In a possible embodiment, when the connection established by the first wireless access device to the second wireless access device by using the first configuration information is the temporary connection, after the first wireless access device establishes the connection to the second wireless access device by using the first configuration information for specific duration, the connection between the first wireless access device and the second wireless access device may be forcibly interrupted. Specifically, the first wireless access device, the second wireless access device, or the server may initiate an operation of forcibly interrupting the connection between the first wireless access device and the second wireless access device.

For example, after the first wireless access device establishes the connection to the second wireless access device by using the first configuration information, if the first wireless access device detects that duration of establishing the connection exceeds two minutes, the first wireless access device may interrupt the connection to the second wireless access device. In another example, the second wireless access device may detect that duration of establishing the connection to the first wireless access device exceeds two minutes, and then the second wireless access device forcibly interrupts the connection to the first wireless access device. In addition, the server may detect that the connection between the first wireless access device and the second wireless access device has been established for more than two minutes, and then the server sends a message to the first wireless access device and/or the second wireless access device, to indicate the first wireless access device and/or the second wireless access device to forcibly interrupt the connection.

It may be understood that duration that can be maintained when the first wireless access device establishes the connection to the second wireless access device by using the first configuration information may be determined according to an actual situation, for example, may be two minutes, 30 seconds, or five minutes, and the foregoing duration is not specifically limited in this embodiment.

It may be understood that in some cases, for example, when a network environment is relatively poor, before the connection between the first wireless access device and the second wireless access device is forcibly interrupted, the first wireless access device may still fail to receive the first notification message. As a result, after the connection between the first wireless access device and the second wireless access device is interrupted, the first wireless access device cannot establish the connection to the second wireless access device by using the second configuration information.

Therefore, to improve a success rate of restoring the connection between the first wireless access device and the second wireless access device, in a possible embodiment, the first wireless access device may re-establish the connection to the second wireless access device by using the first configuration information after specific duration.

For example, the first wireless access device establishes the connection to the second wireless access device by using the first configuration information, and the first wireless access device forcibly interrupts the connection after the connection is maintained for two minutes. Before the connection is forcibly interrupted, if the first wireless access device still does not receive the first notification message delivered by the server, or the first wireless access device still cannot re-establish the connection to the second wireless access device by using the second configuration information, the first wireless access device may re-establish the connection to the second wireless access device by using the first configuration information after an interval of one minute.

In addition, in a scenario in which the mesh network includes a large quantity of MPs, when configuration information of the MPs is changed in batches, a large quantity of MPs may frequently initiate reconnections in a short time, which causes great processing pressure for the server. Therefore, for the MP, an interval duration corresponding to a reconnection initiated by the MP by using the first configuration information may be continuously prolonged as a quantity of reconnections increases, and is restored to initial duration after the interval duration reaches a specific threshold.

For example, after the first wireless access device forcibly interrupts the connection to the second wireless access device for the first time, the first wireless access device re-establishes the connection to the second wireless access device by using the first configuration information after an interval of one minute; after the first wireless access device forcibly interrupts the connection to the second wireless access device for the second time, the first wireless access device re-establishes the connection to the second wireless access device by using the first configuration information after an interval of two minutes; and so on. The interval duration corresponding to the reconnection initiated by the first wireless access device each time is prolonged as the quantity of reconnections increases, and is restored to one minute after the interval duration reaches eight minutes. For example, the interval duration corresponding to the reconnection initiated by the first wireless access device each time may be specifically one minute, two minutes, four minutes, eight minutes, one minute, two minutes, or the like.

The foregoing mainly describes the process of restoring the connection between the first wireless access device and the second wireless access device from a perspective of the first wireless access device. For ease of understanding, the following describes in detail a process of restoring the connection between the first wireless access device and the second wireless access device with reference to an interaction process between the first wireless access device, the second wireless access device, and the server.

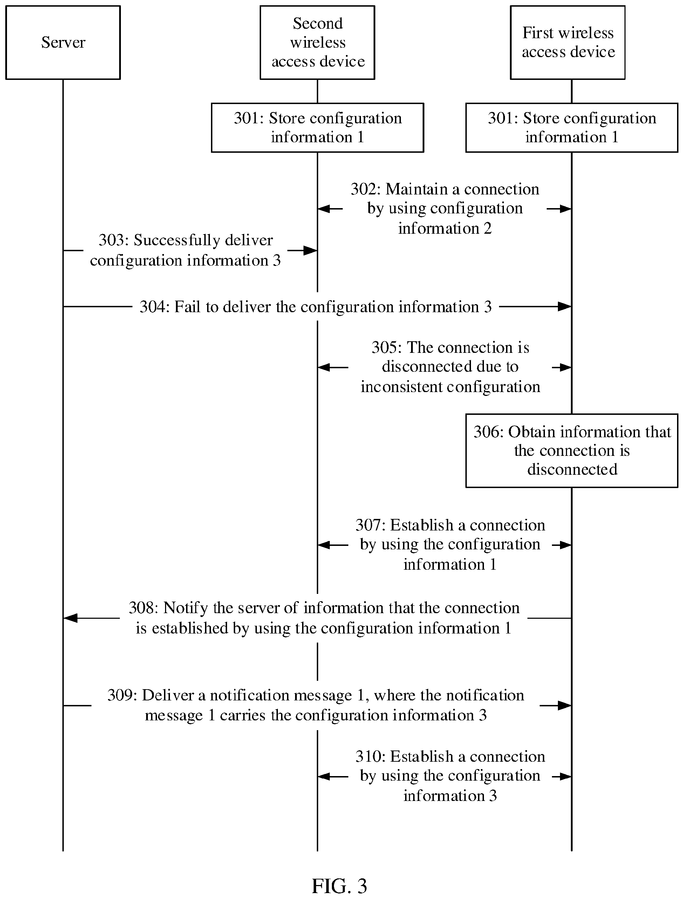

FIG. 3 is a schematic interaction diagram of restoring a connection between devices according to an embodiment of this application. A first wireless access device in FIG. 3 is, for example, an MP, and a second wireless access device is, for example, an MPP. As shown in FIG. 3, a possible process in which the first wireless access device restores the connection to the second wireless access device includes the following steps.

301: The first wireless access device and the second wireless access device each store configuration information 1.

The configuration information 1 stored in each of the first wireless access device and the second wireless access device may be preset when the devices are delivered from a factory, or may be delivered by a server. The configuration information 1 may be, for example, the first configuration information in the foregoing method, and is used to establish a temporary connection between the first wireless access device and the second wireless access device. For details, refer to the foregoing description of the first configuration information.

302: The first wireless access device maintains a connection to the second wireless access device by using configuration information 2.

Before the server delivers new configuration information, the first wireless access device maintains the normal persistent connection to the second wireless access device by using the configuration information 2.

303: The server delivers configuration information 3 to the second wireless access device, and the delivery succeeds.

When configuration information for establishing the connection between the first wireless access device and the second wireless access device needs to be changed, for example, when a key or a channel between the first wireless access device and the second wireless access device needs to be changed, the server may deliver the new configuration information to the first wireless access device and the second wireless access device.

In this embodiment, the server delivers the configuration information 3 to the second wireless access device, and the configuration information 3 is successfully delivered to the second wireless access device. The configuration information 3 may be, for example, the second configuration information in the foregoing method. For details, refer to the foregoing description of the second configuration information.

304: The server delivers the configuration information 3 to the first wireless access device, and the delivery fails.

In this embodiment, the server also delivers the configuration information 3 to the first wireless access device, and the configuration information 3 fails to be delivered. For example, a reason why the delivery fails may be that a packet loss occurs in the configuration information 3 delivered by the server to the first wireless access device. As a result, the first wireless access device does not normally receive the configuration information 3, or the server delivers the configuration information 3 when the first wireless access device performs data backup, and consequently the configuration information 3 does not take effect on the first wireless access device within required time, and the like. Configuration information in the devices at two sides is inconsistent within specific period of time and the connection is disconnected, or the like.

305: The connection between the first wireless access device and the second wireless access device is disconnected.

Because the second wireless access device successfully receives the configuration information 3, but the first wireless access device does not receive the configuration information 3, the first wireless access device continues to use the original configuration information 2, and the second wireless access device uses the configuration information 3. Configuration information in each of the first wireless access device and the second wireless access device is inconsistent. Therefore, the connection between the first wireless access device and the second wireless access device is disconnected.

306: The first wireless access device obtains information of disconnection between the first wireless access device and the second wireless access device.

After the connection between the first wireless access device and the second wireless access device is disconnected, the first wireless access device may autonomously detect a connection status between the first wireless access device and the second wireless access device to obtain the information of disconnection between the first wireless access device and the second wireless access device. The second wireless access device may also learn, by obtaining information from another monitoring device, that the connection between the first wireless access device and the second wireless access device is disconnected.

307: The first wireless access device establishes the connection to the second wireless access device by using the configuration information 1.

After the first wireless access device learns that the connection between the first wireless access device and the second wireless access device is disconnected, the first wireless access device may establish the connection to the second wireless access device by using the stored configuration information 1. Because the second wireless access device also stores the configuration information 1, the first wireless access device may successfully establish the connection to the second wireless access device by using the configuration information 1.

308: The first wireless access device sends a message to the server, to notify the server that the first wireless access device establishes the connection to the second wireless access device by using the configuration information 1.

After the connection between the first wireless access device and the second wireless access device is established, the first wireless access device goes online again, and may register with a cloud management platform on the server. In addition, to enable the server to learn that the first wireless access device establishes the connection to the second wireless access device by using the configuration information 1, the first wireless access device may send the message to the server, where the message is used to notify the server that the first wireless access device establishes the connection to the second wireless access device by using the configuration information 1. Specifically, the message may be, for example, the second message in the foregoing embodiment.

It may be understood that, in this embodiment, the first wireless access device may send the message to the server to notify the server, or the second wireless access device may notify the server. For example, after establishing the connection to the first wireless access device, the second wireless access device may actively report, to the server, information that the connection is established between the second wireless access device and the first wireless access device, and notify the server that the first wireless access device establishes the connection to the second wireless access device by using the first configuration information.

309: The server delivers a notification message 1, where the notification message 1 carries the configuration information 3.

After the server learns that the first wireless access device establishes the connection to the second wireless access device by using the configuration information 1, the server may deliver the notification message 1 to the first wireless access device via the second wireless access device, where the notification message 1 carries the configuration information 3.

It should be noted that, after the second wireless access device successfully receives the configuration information 3 delivered by the server, the second wireless access device may report a feedback message to the server, to feed back that the second wireless access device has successfully received the configuration information 3. In this way, when learning that the first wireless access device establishes the connection to the second wireless access device by using the configuration information 1, the server can determine, based on that the second wireless access device has successfully received the configuration information 3, that the first wireless access device has not successfully received the configuration information 3. Therefore, the server may deliver the notification message 1 to the first wireless access device, where the notification message 1 carries the configuration information 3, to indicate the first wireless access device to establish the connection to the second wireless access device by using the configuration information 3 in the notification message 1.

310: The notification message 1 is delivered successfully, and the first wireless access device establishes the connection to the second wireless access device by using the configuration information 3.

After the notification message 1 is successfully delivered, the first wireless access device may re-establish the connection to the second wireless access device by using the configuration information 3 in the notification message 1.

If the notification message 1 is still not successfully delivered within specific time, for example, within two minutes, the first wireless access device or the second wireless access device may forcibly interrupt the connection between the first wireless access device and the second wireless access device. After the connection between the first wireless access device and the second wireless access device is interrupted, the first wireless access device may cyclically perform the foregoing steps 306 to 309 until the notification message 1 is successfully delivered.

The foregoing describes in detail the process in which the first wireless access device restores the connection to the second wireless access device when the configuration information 3 is successfully delivered to the second wireless access device and the configuration information 3 fails to be delivered to the first wireless access device. The following describes in detail a process in which the first wireless access device restores the connection to the second wireless access device when the configuration information 3 fails to be delivered to the second wireless access device and the configuration information 3 is successfully delivered to the first wireless access device.

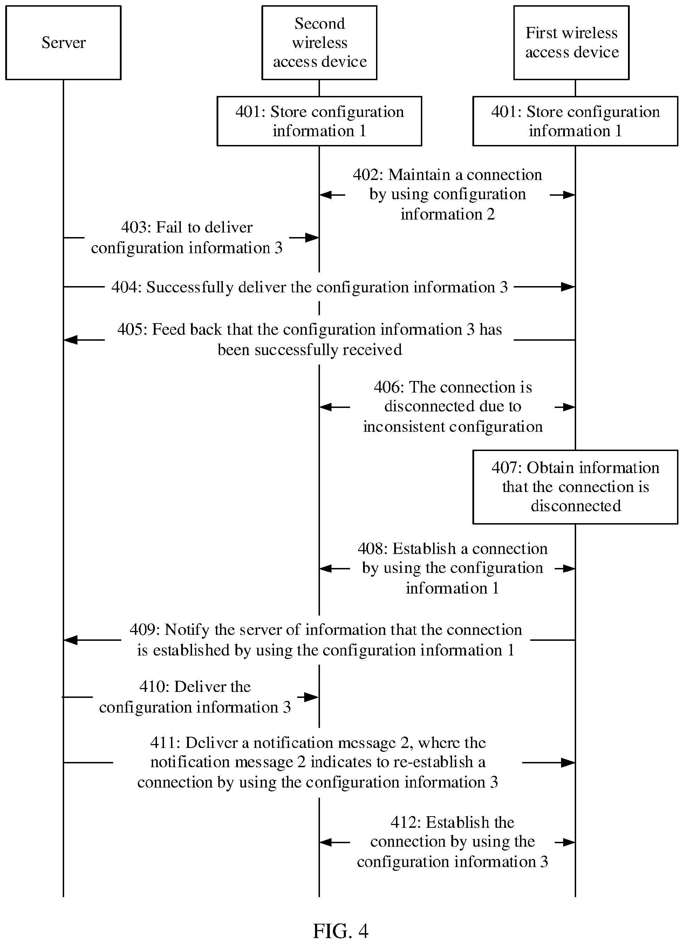

FIG. 4 is a schematic interaction diagram of restoring a connection between devices according to an embodiment of this application. A first wireless access device in FIG. 4 is, for example, an MP, and a second wireless access device is, for example, an MPP. As shown in FIG. 4, another possible process in which the first wireless access device restores the connection to the second wireless access device includes the following steps.

401: The first wireless access device and the second wireless access device each store configuration information 1.

402: The first wireless access device maintains a connection to the second wireless access device by using configuration information 2.

Steps 401 and 402 are similar to the foregoing steps 301 and 302. For details, refer to the foregoing steps 301 and 302. Details are not described herein again.

403: A server delivers configuration information 3 to the second wireless access device, and the delivery fails.

404: The server delivers the configuration information 3 to the first wireless access device, and the delivery succeeds.

In this embodiment, the first wireless access device successfully receives the configuration information 3, but the second wireless access device does not receive the configuration information 3.

405: The first wireless access device feeds back, to the server, that the configuration information 3 is successfully received.

After successfully receiving the configuration information 3 delivered by the server, the first wireless access device may feed back, to the server, that the first wireless access device has successfully received the configuration information 3.

406: The connection between the first wireless access device and the second wireless access device is disconnected.

Because the first wireless access device successfully receives the configuration information 3, but the second wireless access device does not receive the configuration information 3, the second wireless access device continues to use the original configuration information 2, and the first wireless access device uses the configuration information 3. Configuration information in each of the first wireless access device and the second wireless access device is inconsistent. Therefore, the connection between the first wireless access device and the second wireless access device is disconnected.

407: The first wireless access device obtains information of disconnection between the first wireless access device and the second wireless access device.

408: The first wireless access device establishes a connection to the second wireless access device by using the configuration information 1.

409: The first wireless access device sends a message to the server, to notify the server that the first wireless access device establishes the connection to the second wireless access device by using the configuration information 1.

Steps 407 to 409 are similar to the foregoing steps 306 to 308. For details, refer to the foregoing steps 306 to 308. Details are not described herein again.

410: The server delivers the configuration information 3 to the second wireless access device.

After the server learns information that the first wireless access device establishes the connection to the second wireless access device by using the configuration information 1, the server may determine, based on information that indicates that the configuration information 3 is successfully received that is fed back by the first wireless access device, that the configuration information 3 has not been successfully delivered to the second wireless access device. Therefore, the server may continue to deliver the configuration information 3 to the second wireless access device.

411: The server delivers a notification message 2, where the notification message 2 indicates the first wireless access device to establish the connection to the second wireless access device by using the configuration information 3.

Because the first wireless access device reports the feedback message to the server, that is, feeds back that the first wireless access device has successfully received the configuration information 3, in this way, when learning that the first wireless access device establishes the connection to the second wireless access device by using the configuration information 1, the server can determine, based on that the first wireless access device has successfully received the configuration information 3, that the second wireless access device has not successfully received the configuration information 3. Therefore, the server can first re-deliver the configuration information 3 to the second wireless access device, and then deliver the notification message 2 to the first wireless access device, where the notification message 2 indicates that the first wireless access device may establish the connection to the second wireless access device by using the received configuration information 3. That is, when the first wireless access device has received the configuration information 3, the server may no longer deliver the configuration information 3 to the first wireless access device, thereby saving signaling resources.

Certainly, the server may also deliver, to the first wireless access device, a notification message carrying the configuration information 3. In this way, the first wireless access device can directly establish the connection to the second wireless access device by using the configuration information 3 in the notification message.

412: The notification message 2 is delivered successfully, and the first wireless access device establishes the connection to the second wireless access device by using the configuration information 3.

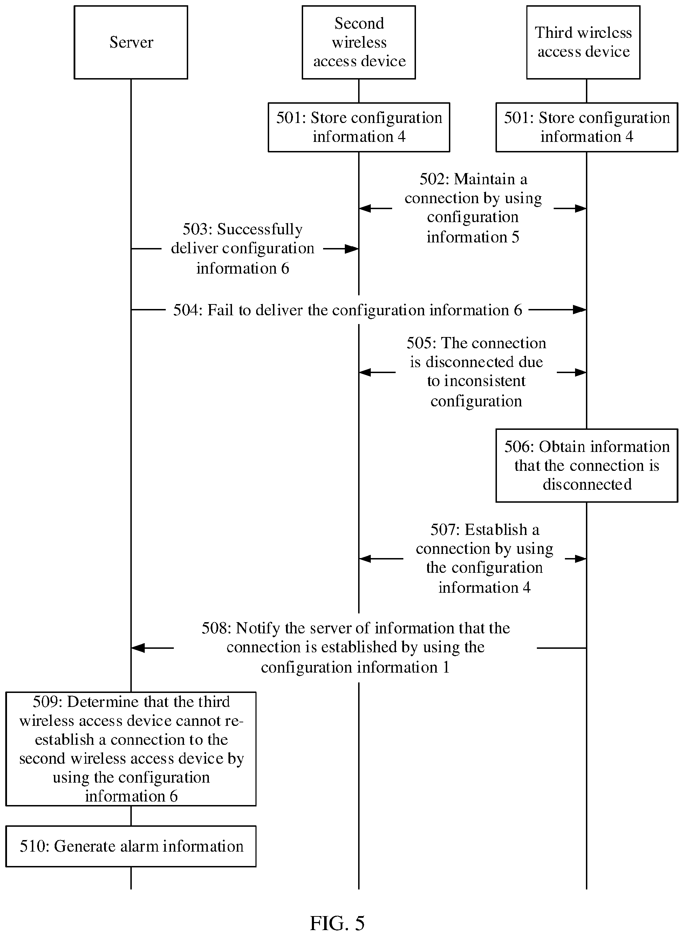

In FIG. 4 and FIG. 5, that the configuration information 1 to 3 obtained by the first wireless access device and the second wireless access device are the same is used as an example. It may be understood that in another possible case, configuration information 1 to 3 obtained by the first wireless access device and the second wireless access device may also be different, but different pairing configuration information can be used for matching. For example, in 301 in FIG. 3, the first wireless access device stores configuration information 1, and the second wireless access device stores configuration information 1'. The configuration information 1 is different from the configuration information 1', but the two devices may be temporarily connected by using the configuration information 1 and the configuration information 1'. Specifically, for example, the configuration information 1 includes a key 1, the configuration information 1' includes a key 2, and the key 1 and the key 2 may be paired and authenticated, so that the second wireless access device allows, based on the authentication, the first wireless access device to perform the temporary connection.

FIG. 5 is a schematic interaction diagram of restoring a connection between devices according to an embodiment of this application. In FIG. 5, a second wireless access device is connected to a server in a wired manner, and a third wireless access device is connected to the second wireless access device in a wireless manner. The second wireless access device is, for example, an MPP, and the third wireless access device is, for example, an MP.

As shown in FIG. 5, a possible process in which the third wireless access device restores the connection to the second wireless access device includes the following steps.

501: The third wireless access device and the second wireless access device each store configuration information 4.

502: The third wireless access device maintains a connection to the second wireless access device by using configuration information 5.

503: A server delivers configuration information 6 to the second wireless access device, and the delivery succeeds.

504: The server delivers the configuration information 6 to the third wireless access device, and the delivery fails.

505: The connection between the third wireless access device and the second wireless access device is disconnected.

506: The third wireless access device obtains information of disconnection between the third wireless access device and the second wireless access device.

507: The third wireless access device establishes a connection to the second wireless access device by using the configuration information 4.

508: The third wireless access device sends a message to the server, to notify the server that the third wireless access device establishes the connection to the second wireless access device by using the configuration information 4.

Steps 501 to 508 are similar to the foregoing steps 301 to 308. For details, refer to the foregoing steps 301 to 308. Details are not described herein again.

509: The server determines that the third wireless access device cannot re-establish the connection to the second wireless access device by using the configuration information 6.

In this embodiment, after the server learns that the third wireless access device establishes the connection to the second wireless access device by using the configuration information 4, the server can determine, based on the configuration information 6, and location information of each of the second wireless access device and the third wireless access device, whether the third wireless access device can re-establish the connection to the second wireless access device by using the configuration information 6.

For example, in a network planning process, the location information of each of the second wireless access device and the third wireless access device may be recorded into the server, for example, specific coordinate information of each of the second wireless access device and the third wireless access device is recorded into the server, so that the server obtains, through calculation, a distance between the third wireless access device and the second wireless access device based on the location information of each of the second wireless access device and the third wireless access device. In addition, the configuration information 6 may include parameters such as an antenna gain, a frequency bandwidth, and transmission power. The server may obtain, through calculation based on the parameters such as the antenna gain, the frequency bandwidth, and the transmission power in the configuration information 6 and the distance between the third wireless access device and the second wireless access device, signal strength between the second wireless access device and the third wireless access device after the second wireless access device establishes the connection to the third wireless access device by using the configuration information 6. If the signal strength obtained through calculation is less than a preset first threshold, it may be considered that the second wireless access device cannot establish the stable and effective connection to the third wireless access device, that is, the server may determine that the third wireless access device cannot re-establish the connection to the second wireless access device by using the configuration information 6. The first threshold may be specifically a minimum signal strength value for which the wireless access devices can establish the stable connection.

510: The server generates alarm information.

When the server determines that the third wireless access device cannot establish the connection to the second wireless access device by using the configuration information 6, the server may no longer deliver the configuration information 6 to the third wireless access device, but generate the alarm information to remind operation and maintenance personnel to adjust the configuration information 6.

It should be noted that, in addition to determining, by using the method described in step 509, whether the third wireless access device can re-establish the connection to the second wireless access device by using the configuration information 6, the server may further determine, by using another method, whether the third wireless access device can re-establish the connection to the second wireless access device by using the configuration information 6.

For example, after step 508, the server may send a notification message to the third wireless access device, to indicate the third wireless access device to connect to the second wireless access device by using the configuration information 6. After receiving the notification message delivered by the server, the third wireless access device disconnects the connection currently established to the third wireless access device by using the configuration information 5, and attempts to establish the connection to the second wireless access device by using the configuration information 6. Because the third wireless access device cannot establish the connection to the second wireless access device by using the configuration information 6, when the third wireless access device cannot establish the connection to the second wireless access device by using the configuration information 6, the third wireless access device continues to connect to the second wireless access device by using the configuration information 4, and notifies the server.

In this way, a process in which the third wireless access device frequently establishes the connection to the second wireless access device by using the configuration information 4 occurs. The server may determine, based on a message sent after the third wireless access device establishes the connection to the second wireless access device each time by using the configuration information 4, a quantity of times that the third wireless access device establishes the connection to the second wireless access device by using the configuration information 4. If the third wireless access device frequently establishes the connection to the second wireless access device by using the configuration information 4, that is, the third wireless access device establishes the connection to the second wireless access device for excessively many times by using the third configuration information, the server may consider that the third wireless access device cannot re-establish the connection to the second wireless access device by using the configuration information 6. Specifically, the server may determine, by determining whether the quantity of times that the third wireless access device establishes the connection to the second wireless access device by using the third configuration information is greater than a preset second threshold, whether the third wireless access device can re-establish the connection to the second wireless access device by using the configuration information 6. If the quantity of times is greater than the preset second threshold, it may be determined that the third wireless access device cannot re-establish the connection to the second wireless access device by using the configuration information 6. The second threshold may be determined according to an actual situation. For example, the second threshold may be 3 or 5. A value of the second threshold is not specifically limited in this embodiment.

The foregoing describes in detail the process of restoring the connection by the first wireless access device or the third wireless access device in a scenario in which the first wireless access device or the third wireless access device is directly connected to the second wireless access device. However, in a mesh network, there may be a multi-level connection scenario, that is, one or more other MPs may be connected between an MPP and an MP.

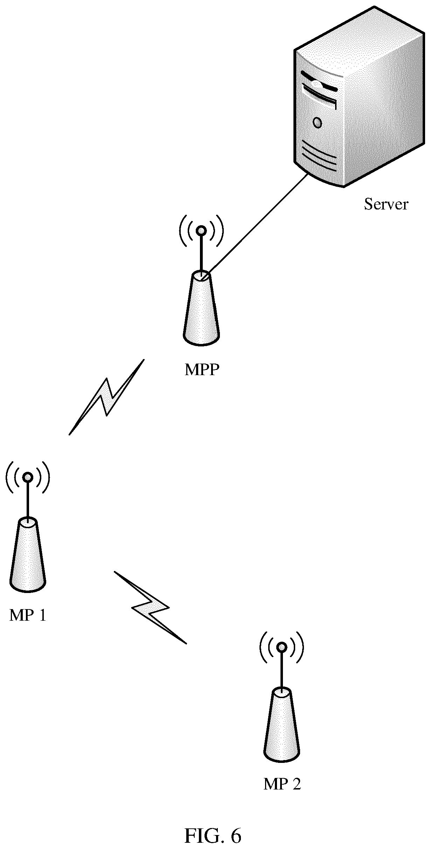

FIG. 6 is a schematic diagram of a mesh network with multi-level connections according to an embodiment of this application. As shown in FIG. 6, a server is directly connected to an MPP in a wired manner, the MPP is connected to an MP 1 in a wireless manner, and the MP 1 is further connected to an MP 2 in a wireless manner. That is, the MP 2 is not directly connected to the MPP, but indirectly connected to the MPP through the MP 1. In a case of the multi-level connections, if the MP 1 is disconnected from the MPP, the MP 2 is also disconnected from the MPP. As a result, the MP 1 and the MP 2 cannot communicate with the server. That is, the connection can be established between the MP 2 and the MPP only when the connection is established between the MP 1 and the MPP.

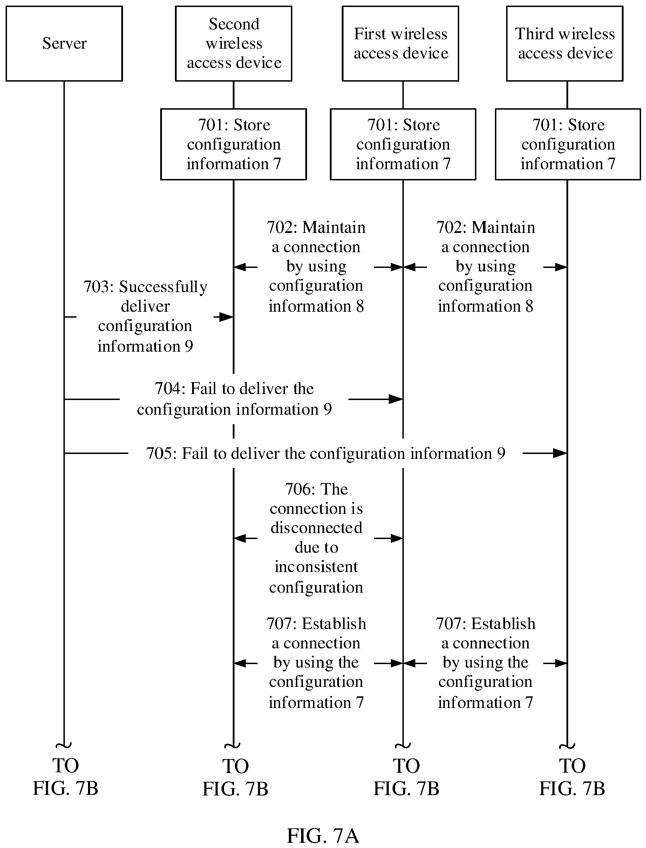

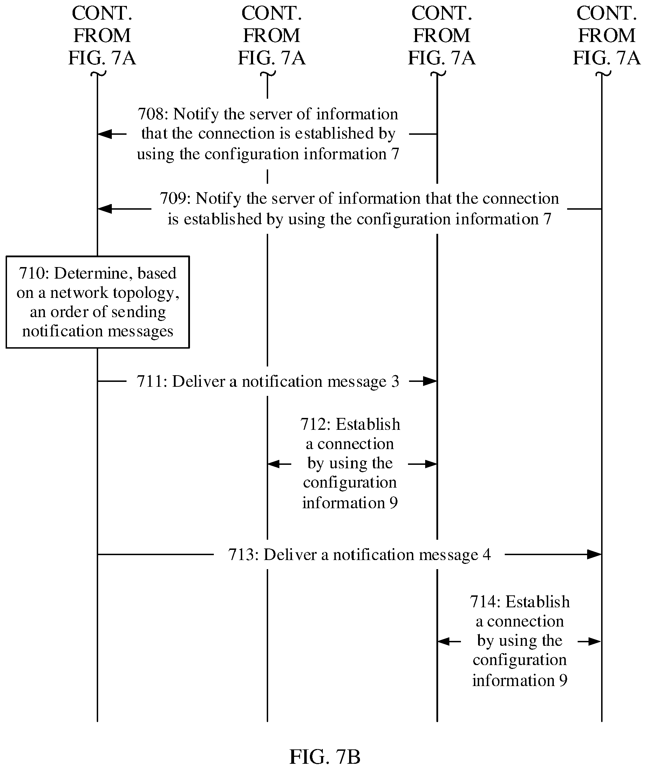

For ease of understanding, the following describes in detail, with reference to FIG. 7A and FIG. 7B, in a mesh network with multi-level connections, how an MP in the mesh network restores a connection to an MPP.

FIG. 7A and FIG. 7B are a schematic flowchart of restoring a connection by a wireless access device according to an embodiment of this application.

In FIG. 7A and FIG. 7B, a second wireless access device may be, for example, the MPP shown in FIG. 6, a first wireless access device may be, for example, the MP 1 shown in FIG. 6, and a third wireless access device may be, for example, the MP 2 shown in FIG. 6.

As shown in FIG. 7A and FIG. 7B, a possible process in which the first wireless access device and the third wireless access device restore connections to the second wireless access device includes the following steps.

701: The first wireless access device, the second wireless access device, and the third wireless access device each store configuration information 7.

It may be understood that, for ease of management and maintenance, configuration information pre-stored in each of the first wireless access device, the second wireless access device, and the third wireless access device may be the same, that is, the first wireless access device may separately establish temporary connections to the second wireless access device and the third wireless access device by using a same set of configuration information.

702: The first wireless access device maintains a connection to the second wireless access device by using configuration information 8, and the first wireless access device also maintains a connection to the third wireless access device by using the configuration information 8.

It may be understood that, in a normal network condition, wireless access devices in a mesh network may also maintain a connection between each other by using same configuration information.

703: A server delivers configuration information 9 to the second wireless access device, and the delivery succeeds.

704: The server delivers the configuration information 9 to the first wireless access device, and the delivery fails.

705: The server delivers the configuration information 9 to the third wireless access device, and the delivery fails.

When the configuration information of the wireless access devices in the entire network needs to be updated uniformly, the server may separately deliver new configuration information (namely, the configuration information 9) to the wireless access devices in the network.

In this embodiment, the server separately delivers the configuration information 9 to the first wireless access device, the second wireless access device, and the third wireless access device, and only the delivery to the second wireless access device succeeds. In addition, after the second wireless access device successfully receives the configuration information 9 delivered by the server, the second wireless access device may send a feedback message to the server, so as to feed back, to the server, that the configuration information 9 is successfully received.

706: A connection between the third wireless access device and the second wireless access device is disconnected.

Because the second wireless access device successfully receives the configuration information 9, the second wireless access device establishes a connection to another wireless access device by using the configuration information 9. However, the configuration information 9 is not successfully delivered to the first wireless access device. Therefore, the first wireless access device can only continue to use the configuration information 8 in this case. Configuration information used in the first wireless access device and the second wireless access device is inconsistent. Therefore, the connection between the first wireless access device and the second wireless access device is disconnected. Similarly, a connection between the third wireless access device and the second wireless access device is also disconnected.

In the foregoing steps 702 and 704 and 705, the configuration information 8 delivered by the server to the first wireless access device and the configuration information 9 delivered by the server to the third wireless access device are the same. In another case, configuration information that is delivered by the server to the first wireless access device and the third wireless access device and that is used to establish a secure connection may also be different. For example, the server delivers the configuration information 9 to the first wireless access device in step 704, and the server delivers configuration information 9' to the third wireless access device in step 705.

707: The first wireless access device establishes a connection to the second wireless access device by using the configuration information 7, and the third wireless access device establishes a connection to the first wireless access device by using the configuration information 7.

After the first wireless access device learns that the connection between the first wireless access device and the second wireless access device is disconnected, the first wireless access device may establish the connection to the second wireless access device by using the stored configuration information 7. Similarly, after the third wireless access device learns that the connection between the third wireless access device and the second wireless access device is disconnected, the third wireless access device also establishes the connection to the second wireless access device by using the stored configuration information 7.

708: The first wireless access device sends a message to the server, to notify the server that the first wireless access device establishes the connection to the second wireless access device by using the configuration information 7.

After the first wireless access device establishes the connection to the second wireless access device by using the configuration information 7, the first wireless access device may re-register with the server via the second wireless access device, and send the message to the server, to notify the server of information that the first wireless access device establishes the connection to the second wireless access device by using the configuration information 7.

709: The third wireless access device sends a message to the server, to notify the server that the third wireless access device establishes the connection to the first wireless access device by using the configuration information 7.

Similarly, after the third wireless access device establishes the connection to the first wireless access device by using the configuration information 7, the third wireless access device may re-register with the server via the first wireless access device and the second wireless access device, and send the message to the server, to notify the server of information that the third wireless access device establishes the connection to the first wireless access device by using the configuration information 7.

710: The server determines, based on a network topology, an order of sending notification messages.

After the server obtains messages sent by the first wireless access device and the third wireless access device, the server may determine that neither the first wireless access device nor the third wireless access device can establish a connection to the second wireless access device.

The third wireless access device is connected to the second wireless access device via the first wireless access device. Therefore, before the first wireless access device restores the connection to the second wireless access device, the third wireless access device cannot restore the connection to the second wireless access device. Therefore, when there are multi-level connections in the network, the server may determine a connection relationship between the wireless access devices based on the network topology, so as to determine a processing order of the wireless access devices.

In this embodiment, the server may determine to first send a notification message to the first wireless access device, and then send a notification message to the third wireless access device, so that the first wireless access device restores the connection to the second wireless access device, and then, the third wireless access device restores the connection to the first wireless access device.

That is, in a multi-level connection network architecture, if wireless access devices with multi-level connections are disconnected, the server may determine a connection relationship between the wireless access devices based on a network topology, so as to determine a processing order of the wireless access devices.

711: The server delivers a notification message 3 to the first wireless access device.

The notification message 3 carries the configuration information 9 used to indicate the first wireless access device to establish the connection to the second wireless access device by using the configuration information 9.

712: The first wireless access device establishes the connection to the second wireless access device by using the configuration information 9.

After the notification message 3 is successfully delivered, the first wireless access device may re-establish the connection to the second wireless access device by using the configuration information 9 in the notification message 3.

713: The server delivers a notification message 4 to the third wireless access device.

The notification message 3 carries the configuration information 9 used to indicate the third wireless access device to establish the connection to the second wireless access device by using the configuration information 9.

In a possible embodiment, the server may deliver the notification message 4 to the third wireless access device after determining that the first wireless access device successfully establishes the connection to the second wireless access device by using the configuration information 9. For example, after the first wireless access device successfully establishes the connection to the second wireless access device by using the configuration information 9, the first wireless access device may feed back, to the server, that the first wireless access device has successfully established the connection to the second wireless access device by using the configuration information 9. The server may learn, based on feedback of the first wireless access device, that the first wireless access device has successfully established the connection to the second wireless access device by using the configuration information 9. Certainly, the second wireless access device may feed back, to the server, that the second wireless access device has successfully established the connection to the first wireless access device by using the configuration information 9. The server may also learn, based on feedback of the second wireless access device, that the first wireless access device has successfully established the connection to the second wireless access device by using the configuration information 9.

In another possible embodiment, the server may also deliver the notification message 4 to the third wireless access device after delivering the notification message 3 to the first wireless access device for preset duration. For example, after the server delivers the notification message 3 to the first wireless access device, the server waits for 10 seconds, and then delivers the notification message 4 to the third wireless access device. The preset duration may be determined based on a network transmission delay and time required by the wireless access device to re-establish the connection by using the new configuration information. The preset duration is not specifically limited in this embodiment.

714: The third wireless access device establishes the connection to the first wireless access device by using the configuration information 9.

After the notification message 4 is successfully delivered, the third wireless access device may re-establish the connection to the first wireless access device by using the configuration information 9 in the notification message 4.

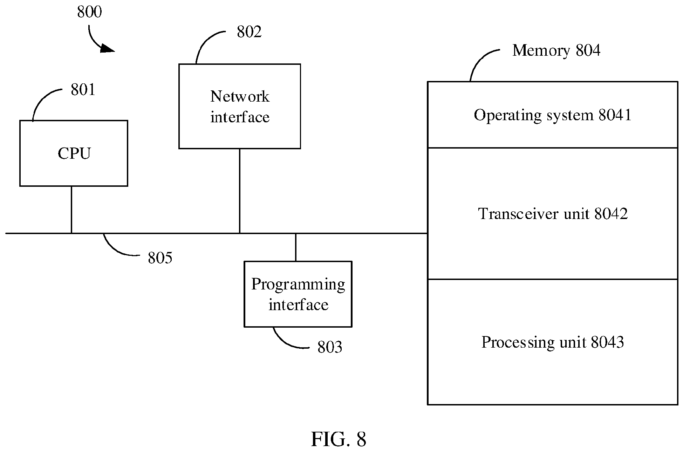

To implement the foregoing embodiments, this application further provides a network device/server. FIG. 8 is a schematic diagram of a structure of a network device/server 800 according to an embodiment of this application.

Although the network device/server 800 shown in FIG. 8 shows some specific features, a person skilled in the art may be aware from embodiments of this application that, for brevity, FIG. 8 does not show various other features, to avoid confusing more related aspects of the implementations disclosed in embodiments of this application. For this purpose, as a restrictive example, in some implementations, the network device/server 800 includes one or more processing units (cpu) 801, a network interface 802, a programming interface 803, a memory 804, and one or more communications buses 805 used to interconnect various components.

In some implementations, in addition to another purpose, the network interface 802 is used to connect to one or more other network devices/servers in a network system. In some implementations, the communications bus 805 includes a circuit that interconnects system components and controls communication between the system components. The memory 804 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 804 may also include a volatile memory. The volatile memory may be a random access memory (random access memory, RAM), and is used as an external cache.

In some implementations, a non-transitory computer-readable storage medium of the memory 804 or the memory 804 stores the following programs, modules, and data structures, or a subset thereof, which specifically include an operating system 8041, a transceiver unit 8042, and a processing unit 8043.

The operating system 8041 is used to process various basic system services and a process used to perform a hardware-related task.

In a possible embodiment, FIG. 8 specifically shows the network device 800. The network device 800 may be, for example, the first wireless access device in the foregoing embodiment. The network device 800 may include, for example, a transceiver unit 8042 and a processing unit 8043. The processing unit 8043 is configured to: establish, by using a first wireless access device, based on disconnection from a second wireless access device, a connection to the second wireless access device by using stored first configuration information. The transceiver unit 8042 is configured to receive a first notification message from a server through the connection established between the first wireless access device and the second wireless access device. The processing unit 8043 is configured to re-establish, by using the first wireless access device, a connection to the second wireless access device based on the first notification message by using second configuration information.

Optionally, in a possible implementation, the first configuration information is preset in the first wireless access device; or the first configuration information is obtained by the first wireless access device from the server via the second wireless access device before the connection to the second wireless access device is disconnected.

Optionally, in a possible implementation, the first notification message includes the second configuration information, and the processing unit 8043 is configured to: re-establish the connection to the second wireless access device by using the second configuration information in the first notification message; or the second configuration information is obtained by the first wireless access device from the server via the second wireless access device before the connection to the second wireless access device is disconnected, and the processing unit 8043 is configured to: re-establish, based on indication of the first notification message, the connection to the second wireless access device by using the second configuration information

Optionally, in a possible implementation, before the first wireless access device receives the first notification message from the server, the transceiver unit 8042 is configured to send a first message to the server through the connection established to the second wireless access device, where the first message is used to notify the server that the first wireless access device has received the second configuration information; and receive the first notification message from the server. The processing unit 8043 is configured to re-establish, based on indication of the first notification message, the connection to the second wireless access device by using the received second configuration information.

Optionally, in a possible implementation, the processing unit 8043 is configured to establish, based on preset duration in which the connection to the second wireless access device is disconnected, the connection to the second wireless access device by using the stored first configuration information.

Optionally, in a possible implementation, the processing unit 8043 is configured to establish, based on disconnection from a plurality of wireless access devices that include the second wireless access device, the connection to the second wireless access device by using the stored first configuration information.

Optionally, in a possible implementation, the transceiver unit 8042 is configured to send a second message to the server through the connection established to the second wireless access device, where the second message is used to notify the server that the first wireless access device establishes the connection to the second wireless access device by using the first configuration information.

In a possible embodiment, FIG. 8 specifically shows the server 800, and the server 800 may be, for example, the server in the foregoing embodiment. The server 800 may include, for example, a transceiver unit 8042 and a processing unit 8043. The processing unit 8043 is configured to determine that a first wireless access device establishes a connection to a second wireless access device by using first configuration information, where the first configuration information is used by the first wireless access device when the first wireless access device is disconnected from the second wireless access device. The transceiver unit 8042 is configured to send a first notification message to the first wireless access device through the connection, where the first notification message is used to indicate the first wireless access device to re-establish a connection to the second wireless access device by using second configuration information.

Optionally, in a possible implementation, the first configuration information is preset in the first wireless access device; or the first configuration information is sent by the server to the first wireless access device via the second wireless access device before the first wireless access device is disconnected from the second wireless access device.

Optionally, in a possible implementation, the first notification message includes the second configuration information, and the first notification message is used to indicate the first wireless access device to re-establish the connection to the second wireless access device by using the second configuration information in the first notification message; or before the connection between the first wireless access device and the second wireless access device is disconnected, the transceiver unit 8042 is configured to send the second configuration information to the first wireless access device via the second wireless access device; and the first notification message is used to indicate the first wireless access device to re-establish the connection to the second wireless access device by using the received second configuration information.

Optionally, in a possible implementation, before the transceiver unit 8042 sends the first notification message to the first wireless access device, the transceiver unit 8042 is configured to: receive a first message that is sent by the first wireless access device through the connection established to the second wireless access device, where the first message is used to notify the server that the first wireless access device has received the second configuration information; and send the first notification message to the first wireless access device, where the first notification message is used to indicate the first wireless access device to re-establish the connection to the second wireless access device by using the received second configuration information.

Optionally, in a possible implementation, the transceiver unit 8042 is configured to receive, before sending the first notification message to the first wireless access device, a second message from the server, where the second message is used to notify the server that the first wireless access device establishes the connection to the second wireless access device by using the first configuration information.

Optionally, in a possible implementation, the processing unit 8043 is configured to: determine that a third wireless access device establishes a connection to the second wireless access device by using third configuration information, where the third configuration information is used by the third wireless access device when the third wireless access device is disconnected from the second wireless access device; and determine, based on locations of the first wireless access device and the third wireless access device in a network topology, to send the first notification message to the first wireless access device.

Optionally, in a possible implementation, the third wireless access device is connected to the second wireless access device via the first wireless access device. After the transceiver unit 8042 sends a first notification message to the first wireless access device through the connection, the transceiver unit 8042 is further configured to re-establish a connection to the second wireless access device via the first wireless access device, or send a second notification message to the third wireless access device after sending the first notification message for preset duration, where the second notification message is used to indicate the third wireless access device to re-establish the connection to the second wireless access device by using fourth configuration information.

Optionally, in a possible implementation, the processing unit 8043 is configured to: determine, based on a received third message, that a third wireless access device establishes a connection to the second wireless access device by using third configuration information, where the third configuration information is used by the third wireless access device when the third wireless access device is disconnected from the second wireless access device; and determine that the third wireless access device cannot re-establish the connection to the second wireless access device by using fourth configuration information. The server generates alarm information.

Optionally, in a possible implementation, the processing unit 8043 is configured to: determine signal strength between the third wireless access device and the second wireless access device based on the second configuration information and a distance between the third wireless access device and the second wireless access device; and determine, based on that the signal strength is less than a first threshold, that the third wireless access device cannot re-establish the connection to the second wireless access device by using the fourth configuration information.

Optionally, in a possible implementation, the processing unit 8043 determines a quantity of times that the third wireless access device establishes the connection to the second wireless access device by using the third configuration information. The processing unit 8043 determines, based on that the quantity of times is greater than a second threshold, that the third wireless access device cannot re-establish the connection to the second wireless access device by using the fourth configuration information.

In a possible embodiment, FIG. 8 specifically shows the network device 800. The network device 800 may be, for example, the second wireless access device in the foregoing embodiment. The network device 800 may include, for example, a transceiver unit 8042 and a processing unit 8043. The processing unit 8043 is configured to determine, based on stored information, to allow a first wireless access device to establish a connection by using first configuration information, where the first configuration information is used by the first wireless access device when the first wireless access device is disconnected from a second wireless access device. The transceiver unit 8042 is configured to forward, to the first wireless access device through the connection, first notification message sent by a server. The transceiver unit 8042 is configured to: receive second configuration information from the first wireless access device, and allow, based on the second configuration information, the first wireless access device to re-establish a connection.

Optionally, in a possible implementation, the stored information includes a first key, the first configuration information includes a second key, and the processing unit 8043 is configured to determine, based on matching between the first key and the second key, to allow the first wireless access device to establish the connection by using the first configuration information.

Optionally, in a possible implementation, before the transceiver unit 8042 forwards, to the first wireless access device through the connection, a first notification message sent by a server, the transceiver unit 8042 is further configured to send a second message to the server through the connection, where the second message is used to notify the server that the first wireless access device establishes the connection to the second wireless access device by using the first configuration information.

In various implementations, the network device/server 800 is configured to perform the device connection method provided in embodiments of this application, for example, perform the device connection method corresponding to the embodiment shown in FIG. 3, FIG. 4, FIG. 5, or FIG. 7A and FIG. 7B. FIG. 8 shows a possible implementation form of the transceiver unit 8042 and the processing unit 8043 in the network device/server 800. Actually, the transceiver unit 8042 and the processing unit 8043 may be a software module, a hardware module, or a module combining software and hardware. For example, in another implementation form, a function of the transceiver unit 8042 may be performed by the network interface 802 in the network device/server 800, and a function of the processing unit 8043 is performed by a processor in the network device/server 800 by invoking program code in the memory.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It should be understood that "one embodiment" or "an embodiment" mentioned in the entire specification does not mean that particular features, structures, or characteristics related to embodiment are included in at least one embodiment of this application. Therefore, "in one embodiment" or "in an embodiment" appearing in the specification does not refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device/server) to perform all or some of the steps of the methods described in embodiments of this application. The foregoing storage medium includes any medium that can store program code, such as a USB flash drive, a portable hard disk, a read-only memory, a random access memory, a magnetic disk, or an optical disc.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on the computer, all or some of the procedure or functions according to embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the spirit and scope of the technical solutions of embodiments of this application.

## Claims

1. A device connection method, wherein the method comprises:
establishing, by a first wireless access device based on disconnection from a second wireless access device, a connection to the second wireless access device by using stored first configuration information;
receiving, by the first wireless access device, a first notification message from a server through the connection established to the second wireless access device; and
re-establishing, by the first wireless access device, a connection to the second wireless access device based on the first notification message by using second configuration information.

2. The method according to claim 1, wherein
the first configuration information is preset in the first wireless access device; or
the first configuration information is obtained by the first wireless access device from the server via the second wireless access device before disconnection from the second wireless access device.

3. The method according to claim 1 or 2, wherein the re-establishing, by the first wireless access device, a connection to the second wireless access device based on the first notification message by using second configuration information comprises:
re-establishing, by the first wireless access device, the connection to the second wireless access device by using the second configuration information in the first notification message, wherein the first notification message comprises the second configuration information; or
re-establishing, by the first wireless access device based on indication of the first notification message, the connection to the second wireless access device by using the second configuration information, wherein the second configuration information is obtained by the first wireless access device from the server via the second wireless access device before disconnection from the second wireless access device.

4. The method according to claim 3, wherein the method further comprises:
before the first wireless access device receives the first notification message from the server, sending, by the first wireless access device, a first message to the server through the connection established to the second wireless access device, wherein the first message is used to notify the server that the first wireless access device has received the second configuration information; and
the re-establishing, by the first wireless access device based on indication of the first notification message, the connection to the second wireless access device by using the second configuration information comprises:
receiving, by the first wireless access device, the first notification message from the server, and re-establishing, by the first wireless access device based on indication of the first notification message, the connection to the second wireless access device by using the received second configuration information.

5. The method according to any one of claims 1 to 4, wherein the establishing, by a first wireless access device based on disconnection from a second wireless access device, a connection to the second wireless access device by using stored first configuration information comprises:
establishing, by the first wireless access device based on preset duration in which the connection to the second wireless access device is disconnected, the connection to the second wireless access device by using the stored first configuration information.

6. The method according to any one of claims 1 to 4, wherein the establishing, by a first wireless access device based on disconnection from a second wireless access device, a connection to the second wireless access device by using stored first configuration information comprises:
establishing, by the first wireless access device based on disconnection from a plurality of wireless access devices that comprise the second wireless access device, the connection to the second wireless access device by using the stored first configuration information.

7. The method according to any one of claims 1 to 6, wherein before the receiving, by the first wireless access device, a first notification message from a server through the connection established to the second wireless access device, the method further comprises:
sending, by the first wireless access device, a second message to the server through the connection established to the second wireless access device, wherein the second message is used to notify the server that the first wireless access device establishes the connection to the second wireless access device by using the first configuration information.

8. A device connection method, comprising:
determining, by a server, that a first wireless access device establishes a connection to a second wireless access device by using first configuration information, wherein the first configuration information is used by the first wireless access device when the first wireless access device is disconnected from the second wireless access device; and
sending, by the server, a first notification message to the first wireless access device through the connection, wherein the first notification message indicates the first wireless access device to re-establish a connection to the second wireless access device by using second configuration information.

9. The method according to claim 8, wherein
the first configuration information is preset in the first wireless access device; or
the first configuration information is sent by the server to the first wireless access device via the second wireless access device before the first wireless access device is disconnected from the second wireless access device.

10. The method according to claim 8, wherein
the first notification message comprises the second configuration information, and the first notification message indicates the first wireless access device to re-establish the connection to the second wireless access device by using the second configuration information in the first notification message; or
before the connection between the first wireless access device and the second wireless access device is disconnected, the server sends the second configuration information to the first wireless access device via the second wireless access device; and
the first notification message indicates the first wireless access device to re-establish the connection to the second wireless access device by using the received second configuration information.

11. The method according to any one of claims 8 to 10, wherein the method further comprises:
before the server sends the first notification message to the first wireless access device, receiving, by the server, a first message that is sent by the first wireless access device through the connection established to the second wireless access device, wherein the first message is used to notify the server that the first wireless access device has received the second configuration information; and
sending, by the server, the first notification message to the first wireless access device, wherein the first notification message is used to indicate the first wireless access device to re-establish the connection to the second wireless access device by using the received second configuration information.

12. The method according to any one of claims 8 to 11, wherein the method further comprises:
before the server sends the first notification message to the first wireless access device, receiving, by the server, a second message, wherein the second message is used to notify the server that the first wireless access device establishes the connection to the second wireless access device by using the first configuration information.

13. The method according to any one of claims 8 to 12, wherein the method further comprises:
determining, by the server, that a third wireless access device establishes a connection to the second wireless access device by using third configuration information, wherein the third configuration information is used by the third wireless access device when the third wireless access device is disconnected from the second wireless access device; and
determining, by the server based on locations of the first wireless access device and the third wireless access device in a network topology, to send the first notification message to the first wireless access device.

14. The method according to claim 13, wherein the third wireless access device is connected to the second wireless access device via the first wireless access device; and
after the sending, by the server, a first notification message to the first wireless access device through the connection, the method further comprises:
re-establishing, by the server, a connection to the second wireless access device by using the first wireless access device, or sending, by the server, a second notification message to the third wireless access device after sending the first notification message for preset duration, wherein the second notification message is used to indicate the third wireless access device to re-establish the connection to the second wireless access device by using fourth configuration information.

15. The method according to any one of claims 8 to 12, wherein the method further comprises:
determining, by the server based on a received third message, that a third wireless access device establishes a connection to the second wireless access device by using third configuration information, wherein the third configuration information is used by the third wireless access device when the third wireless access device is disconnected from the second wireless access device; and
determining, by the server, that the third wireless access device cannot re-establish the connection to the second wireless access device by using fourth configuration information, and generating, by the server, alarm information.

16. The method according to claim 15, wherein the determining, by the server, that the third wireless access device cannot re-establish the connection to the second wireless access device by using fourth configuration information comprises:
determining, by the server, signal strength between the third wireless access device and the second wireless access device based on the third configuration information and a distance between the third wireless access device and the second wireless access device; and
determining, by the server based on that the signal strength is less than a first threshold, that the third wireless access device cannot re-establish the connection to the second wireless access device by using the fourth configuration information.

17. The method according to claim 15, wherein the determining, by the server, that the third wireless access device cannot re-establish the connection to the second wireless access device by using fourth configuration information comprises:
determining, by the server, a quantity of times that the third wireless access device establishes the connection to the second wireless access device by using the third configuration information; and
determining, by the server based on that the quantity of times is greater than a second threshold, that the third wireless access device cannot re-establish the connection to the second wireless access device by using the fourth configuration information.

18. A device connection method, comprising:
determining, by a second wireless access device based on stored information, to allow a first wireless access device to establish a connection by using first configuration information, wherein the first configuration information is used by the first wireless access device when the first wireless access device is disconnected from the second wireless access device;
forwarding, by the second wireless access device to the first wireless access device through the connection, a first notification message sent by a server; and
receiving, by the second wireless access device, second configuration information from the first wireless access device, and allowing, based on the second configuration information, the first wireless access device to re-establish a connection.

19. The method according to claim 18, wherein the stored information comprises a first key, the first configuration information comprises a second key, and the determining, by a second wireless access device based on stored information, to allow a first wireless access device to establish a connection by using first configuration information comprises:
determining, by the second wireless access device based on matching between the first key and the second key, to allow the first wireless access device to establish the connection by using the first configuration information.

20. The method according to claim 18 or 19, wherein before the forwarding, by the second wireless access device to the first wireless access device through the connection, a first notification message sent by a server, the method further comprises: sending, by the second wireless access device, a second message to the server through the connection, wherein the second message is used to notify the server that the first wireless access device establishes the connection to the second wireless access device by using the first configuration information.

21. A network device, comprising a processor and a memory, wherein the memory is configured to store instructions, and the processor is configured to execute the instructions in the memory, so that the network device performs the method according to any one of claims 1 to 7 or claims 18 to 20.

22. A server, comprising a processor and a memory, wherein the memory is configured to store instructions, and the processor is configured to execute the instructions in the memory, so that the server performs the method according to any one of claims 8 to 17.

23. A chip, wherein the chip is used in a network device, the chip comprises a processor, and the processor is configured to perform operations of the network device in the method according to any one of claims 1 to 7 or claims 18 to 20.

24. A computer-readable storage medium, wherein the computer storage medium stores computer-readable instructions, and when the computer-readable instructions are executed by a processor, the method according to any one of claims 1 to 20 is implemented.
